# EUROPEAN PATENT APPLICATION

(11) **EP 3 764 514 A1**
(43) Date of publication of application: **13.01.2021**
(21) Application number: 19792705.6
(22) Date of filing: 28.03.2019
(51) Int. Cl.: H02K 3/50, H02K 9/19, H02K 15/04

(54) **STATOR AND METHOD FOR PRODUCING STATOR**

(30) Priority: 27.04.2018 JP 2018086707; 29.11.2018 JP 2018222967
(71) Applicant: AISIN AW CO., LTD., Anjo-shi, Aichi, 444-1192 (JP); Hayashikogyosyo Co., Ltd., Nakatsugawa-shi, Gifu 509-9131 (JP)
(72) Inventor: KUROYANAGI, Toru, Anjo-shi, Aichi 444-1192 (JP); HOBO, Takahiko, Nakatsugawa-shi, Gifu 509-9131 (JP)
(74) Representative: Kramer Barske Schmidtchen Patentanwälte PartG mbB
(86) International application number: PCT/JP2019/013812
(87) International publication number: WO 2019/208099

(57) **Abstract**

A stator includes: a stator core; a plurality of coils each including coil end portions protruding from end faces of the stator core facing in a central axis direction and a lead wire portion; and a connecting wire unit that is disposed between outer ends of the coil end portions facing in the central axis direction and the end faces of the stator core in the central axis direction and is connected to the lead wire portions of the coils.

## Description

### TECHNICAL FIELD

The present invention relates to stators and stator manufacturing methods.

### BACKGROUND ART

Stators including connecting wire units are known in the related art (see, for example, Patent Document 1).

Patent Document 1 discloses a stator that includes: a stator core; coils each including coil end portions extending from axial end faces of the stator core, and a lead wire portion; and wires (i.e., a connecting wire unit) connected to the lead wire portions of the coils. The stator is provided with a wire retaining member. Components of the wire retaining member are stacked and disposed on axial ends of the coil end portions such that an entirety of the wire retaining member protrudes axially outward from axial outer ends of the coil end portions. The wire retaining member is provided with: a retainer that retains the wires; and spacers disposed between the retainer and the axial outer ends of the coil end portions. An entirety of each wire retained by the wire retaining member and an entirety of each spacer are thus disposed axially outward of the axial outer ends of the coil end portions.

### Related Art Documents

### Patent Documents

Patent Document 1: Japanese Unexamined Patent Application Publication No. 2017-118794 (JP 2017-118794 A)

### SUMMARY OF THE INVENTION

### Problem to be Solved by the Invention

Unfortunately, the stator disclosed in Patent Document 1 has at least an entirety of each wire disposed axially outward of the axial outer ends of the coil end portions, resulting in an increase in the size of the stator in an axial direction. Accordingly, what are desired are a stator and a stator manufacturing method that would be able to prevent an increase in size in an axial direction (i.e., a central axis direction) if the stator includes wires (i.e., a connecting wire unit) connected to lead wire portions as is known in the related art.

The invention has been made to solve the above-described problems, and an object of the invention is to provide a stator and a stator manufacturing method that are able to prevent an increase in size in a central axis direction.

### Means for Solving the Problem

To achieve the above object, a stator according to a first aspect of the invention includes: a stator core; a plurality of coils each including coil end portions protruding from end faces of the stator core facing in a central axis direction, and a lead wire portion; and a connecting wire unit that is disposed between outer ends of the coil end portions facing in the central axis direction and the end faces of the stator core in the central axis direction and is connected to the lead wire portions of the coils.

As described above, the stator according to the first aspect of the invention includes the connecting wire unit disposed between the outer ends of the coil end portions facing in the central axis direction and the end faces of the stator core in the central axis direction. Thus, at least a portion of the connecting wire unit is disposed closer to the stator core (i.e., inward in the central axis direction) relative to the outer ends of the coil end portions facing in the central axis direction. Accordingly, an increase in size in the central axis direction is more effectively prevented than when an entirety of the connecting wire unit is disposed to protrude outward in the central axis direction from the outer ends of the coil end portions facing in the central axis direction.

A stator manufacturing method according to a second aspect of the invention is a method for manufacturing a stator including a stator core, a plurality of coils, and a connecting wire unit connected to the coils. The method includes: a coil placing step involving placing the coils in the stator core such that coil end portions protrude from end faces of the stator core facing in a central axis direction; a connecting wire unit placing step involving placing the connecting wire unit on the end faces of the stator core; and a coil end portion forming step involving, after the coil placing step and the connecting wire unit placing step, forming the coil end portions such that the connecting wire unit is disposed between outer ends of the coil end portions facing in the central axis direction and the end faces of the stator core in the central axis direction.

The stator manufacturing method according to the second aspect of the invention thus enables placement of the connecting wire unit between the outer ends of the coil end portions facing in the central axis direction and the end faces of the stator core in the central axis direction. Accordingly, at least a portion of the connecting wire unit is disposed closer to the stator core (i.e., inward in the central axis direction) relative to the outer ends of the coil end portions facing in the central axis direction. Consequently, this aspect is able to provide the stator manufacturing method that makes it possible to more effectively prevent an increase in size in the central axis direction than when an entirety of the connecting wire unit is disposed to protrude outward in the central axis direction from the outer ends of the coil end portions facing in the central axis direction.

### Effects of the Invention

As described above, the present invention is able to prevent an increase in the size of a stator in a central axis direction.

### BRIEF DESCRIPTION OF THE DRAWINGS

[FIG. 1] FIG 1 is a plan view of a dynamo-electric machine (which includes a stator) according to first and second embodiments of the present invention.
[FIG. 2] FIG. 2 is a cross-sectional view of a structure of a portion of the stator according to the first embodiment of the present invention.
[FIG. 3] FIG. 3 is a diagram schematically illustrating how coils according to the first embodiment of the present invention are connected.
[FIG. 4] FIG. 4 is a diagram illustrating the coil disposed in slots according to the first embodiment of the present invention.
[FIG. 5] FIG. 5 is a radial cross-sectional view of a structure of a first retaining member according to the first embodiment of the present invention.
[FIG. 6] FIG. 6 is a radial cross-sectional view of a structure of a second retaining member according to the first embodiment of the present invention.
[FIG. 7] FIG 7 is a plan view of the first retaining member according to the first embodiment of the present invention.
[FIG. 8] FIG 8 is a diagram illustrating flow grooves of the first retaining member according to the first embodiment of the present invention.
[FIG. 9] FIG. 9 is a diagram illustrating a structure of a neutral point connecting wire portion according to the first embodiment of the present invention.
[FIG. 10] FIG 10 is a plan view of one of remote connecting wire portions according to the first embodiment of the present invention.
[FIG. 11] FIG. 11 is a plan view of the second retaining member according to the first embodiment of the present invention.
[FIG. 12] FIG. 12 is a diagram illustrating flow grooves of the second retaining member according to the first embodiment of the present invention.
[FIG. 13] FIG. 13 is a flow chart illustrating stator manufacturing steps according to the first embodiment of the present invention.
[FIG. 14] FIG. 14 is a diagram illustrating a step of placing the coils according to the first embodiment of the present invention in a stator core.
[FIG. 15] FIG. 15 is a diagram illustrating a step of placing the first and second retaining members according to the first embodiment of the present invention on the stator core.
[FIG. 16] FIG. 16 is a diagram illustrating a coil end portion forming step according to the first embodiment of the present invention (when coil end portions are to be formed).
[FIG. 17] FIG. 17 is a diagram illustrating the coil end portion forming step according to the first embodiment of the present invention (when the coil end portions have been formed).
[FIG. 18] FIG. 18 is a radial cross-sectional view of a structure of a first retaining member according to the second embodiment of the present invention.
[FIG. 19] FIG. 19 is a radial cross-sectional view of a structure of a second retaining member according to the second embodiment of the present invention.
[FIG. 20] FIG. 20 is a plan view of a structure of the second retaining member according to the second embodiment of the present invention.
[FIG. 21] FIG. 21 is a plan view of a first retaining member according to a third embodiment of the present invention.
[FIG. 22] FIG. 22 is a plan view of a lead wire connection terminal according to the third embodiment of the present invention.
[FIG. 23] FIG. 23 is a diagram illustrating the lead wire connection terminal according to the third embodiment of the present invention as viewed in a circumferential direction.
[FIG. 24] FIG. 24 is a diagram illustrating the lead wire connection terminal according to the third embodiment of the present invention as viewed in a radial direction.
[FIG. 25] FIG. 25 is a diagram illustrating a remote connecting wire portion according to the third embodiment of the present invention as viewed in the circumferential direction.
[FIG. 26] FIG. 26 is a diagram illustrating the remote connecting wire portion according to the third embodiment of the present invention as viewed in the radial direction.
[FIG. 27] FIG. 27 is a diagram illustrating a structure of a neutral point connecting wire portion according to the third embodiment of the present invention.
[FIG. 28] FIG. 28 is a flow chart illustrating stator manufacturing steps according to the third embodiment of the present invention.
[FIG. 29A] FIG. 29Ais a diagram illustrating a step of manufacturing a round wire to be used for the lead wire connection terminal according to the third embodiment of the present invention as viewed in a direction D3.
[FIG. 29B] FIG. 29B is a diagram illustrating the step of manufacturing the round wire to be used for the lead wire connection terminal according to the third embodiment of the present invention as viewed in a direction D1.
[FIG. 29C] FIG. 29C is a diagram illustrating the step of manufacturing the round wire to be used for the lead wire connection terminal according to the third embodiment of the present invention as viewed in a direction D2.
[FIG. 30] FIG. 30 is a diagram illustrating the lead wire connection terminal according to the third embodiment of the present invention, which is housed in the first retaining member, as viewed in the circumferential direction.
[FIG. 31] FIG. 31 is a diagram illustrating the lead wire connection terminal according to the third embodiment of the present invention, which is housed in the first retaining member, as viewed in the radial direction.
[FIG. 32A] FIG 32A is a diagram of a star-shaped round wire, illustrating a step of manufacturing a round wire to be used for the remote connecting wire portion according to the third embodiment of the present invention.
[FIG. 32B] FIG. 32B is a diagram illustrating a step of twisting the star-shaped round wire in the circumferential direction.
[FIG. 32C] FIG 32C is a diagram illustrating the round wire that has been formed and is to be used for the remote connecting wire portion.
[FIG. 33] FIG. 33 is a diagram illustrating a step of bending the lead wire connection terminal according to the third embodiment of the present invention in the circumferential direction.
[FIG. 34] FIG. 34 is a diagram illustrating a step of placing a first lead wire portion in the vicinity of the lead wire connection terminal according to the third embodiment of the present invention, as viewed in the radial direction.
[FIG. 35] FIG 35 is a diagram illustrating the step of placing the first lead wire portion in the vicinity of the lead wire connection terminal according to the third embodiment of the present invention, as viewed in the circumferential direction.
[FIG. 36] FIG. 36 is a diagram illustrating a step of mechanically and metallurgically joining the lead wire connection terminal and the first lead wire portion according to the third embodiment of the present invention, as viewed in the radial direction.
[FIG. 37] FIG. 37 is a diagram illustrating the step of mechanically and metallurgically joining the lead wire connection terminal and the first lead wire portion according to the third embodiment of the present invention, as viewed in the circumferential direction.
[FIG. 38] FIG. 38 is a diagram illustrating the first lead wire portion according to the third embodiment of the present invention, an excess length of which has been cut off.
[FIG. 39] FIG. 39 is a diagram illustrating a step of mechanically and metallurgically joining the remote connecting wire portion and a second lead wire portion according to the third embodiment of the present invention.
[FIG. 40] FIG. 40 is a diagram illustrating a step of mechanically and metallurgically joining the neutral point connecting wire portions and the first lead wire portions according to the third embodiment of the present invention.
[FIG. 41] FIG. 41 is a diagram illustrating a structure of a first retaining member according to a first variation of the first to third embodiments of the present invention.
[FIG. 42] FIG. 42 is a cross-sectional view of a structure of a stator according to a second variation of the first to third embodiments of the present invention.

### MODES FOR CARRYING OUT THE INVENTION

Embodiments of the present invention will be described below with reference to the drawings.

### First Embodiment

### Structure of Stator

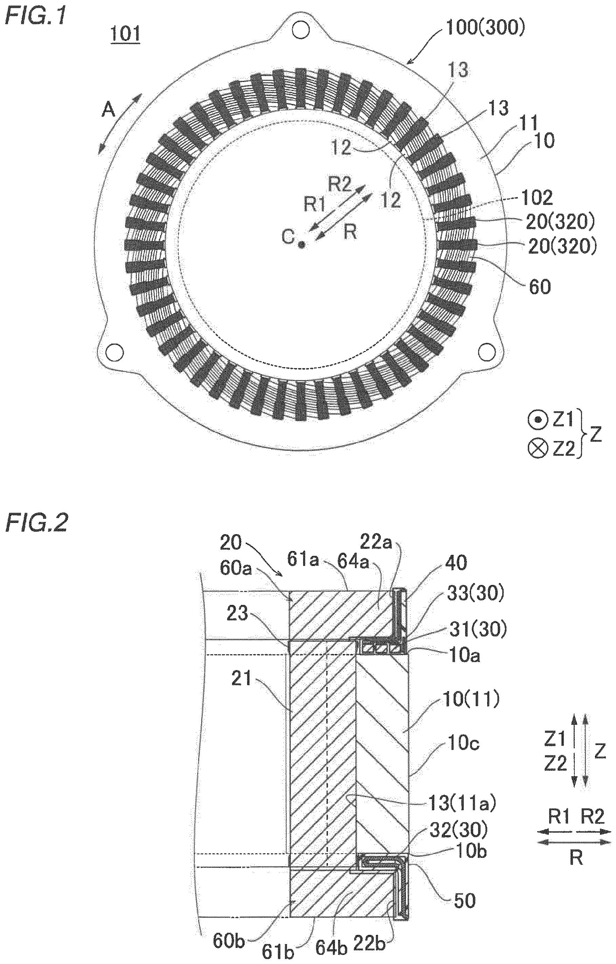

Referring to FIGS. 1 to 11, a structure of a stator 100 according to the present embodiment will be described. As used herein, the terms "first side in a central axis direction" and "first axial side" each refer to the direction of an arrow Z1, and the terms "second side in the central axis direction" and "second axial side" each refer to the direction of an arrow Z2. The term "radially inward" refers to an inner side in a radial direction of the stator 100 (i.e., the direction of an arrow R1). The term "radially outward" refers to an outer side in the radial direction of the stator 100 (i.e., the direction of an arrow R2). The term "circumferential direction" refers to a circumferential direction of the stator 100 (i.e., the direction of an arrow A).

As illustrated in FIG. 1, the stator 100 constitutes a portion of a dynamo-electric machine 101. The dynamo-electric machine 101 is mounted on, for example, a vehicle. Specifically, the stator 100 is disposed to face a rotor 102 in the radial direction. The dynamo-electric machine 101 is provided in the form of, for example, an inner rotor type motor.

The stator 100 includes a stator core 10. The stator core 10 has an annular shape. The stator core 10 is provided with: teeth 12 protruding radially inward from an annular back yoke 11; and a plurality of slots 13 each defined between the teeth 12 adjacent to each other in the circumferential direction. Each slot 13 is provided to extend in the central axis direction. Each slot 13 is provided with an opening facing radially inward. In FIG. 1, a first retaining member 40 and a second retaining member 50 (which will be described below) are not illustrated.

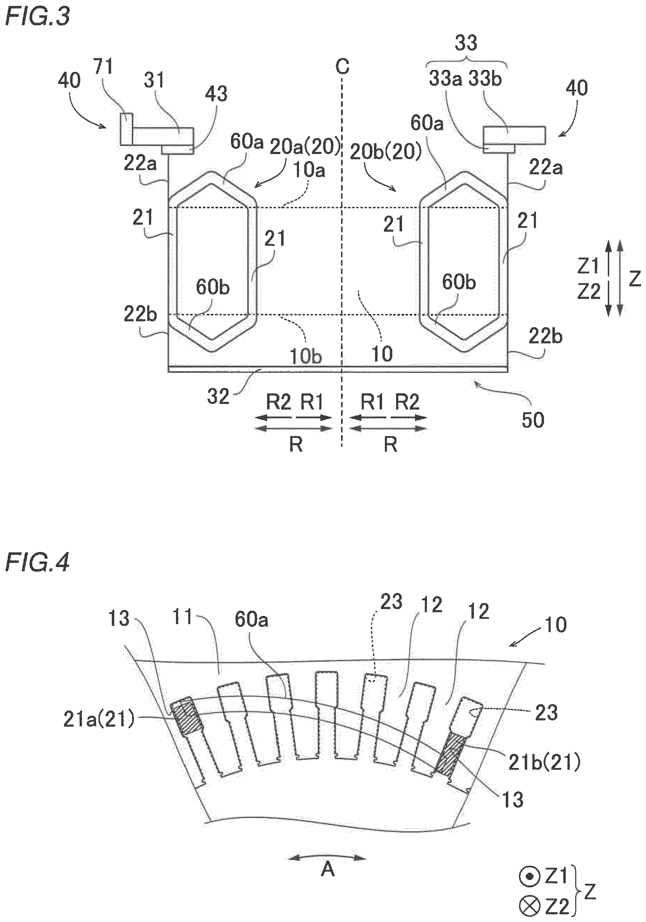

As illustrated in FIG. 2, the stator 100 according to the first embodiment includes a plurality of coils 20, a connecting wire unit 30, the first retaining member 40, and the second retaining member 50. The connecting wire unit 30 includes a power connecting wire portion 31, remote connecting wire portions 32, and a neutral point connecting wire portion 33. As illustrated in FIG. 3, the coils 20 are each provided, for example, by winding a round wire. The coils 20 each include: a pair of slot-housed portions 21 housed in the slots 13 located at different positions in the circumferential direction (see FIG. 4); a coil end portion 60a connecting the pair of slot-housed portions 21 and protruding from an axial end face 10a of the stator core 10; a coil end portion 60b connecting the pair of slot-housed portions 21 and protruding from an axial end face 10b of the stator core 10; a first lead wire portion 22a defining an end of the coil 20; and a second lead wire portion 22b defining an end of the coil 20. The power connecting wire portion 31 and the neutral point connecting wire portion 33 are an example of a "first connecting wire portion" in the claims. Each remote connecting wire portion 32 is an example of a "second connecting wire portion" and an example of a "remote connecting portion" in the claims. The first and second lead wire portions 22a and 22b are an example of a "lead wire portion".

As illustrated in FIG. 4, the pair of slot-housed portions 21 of each of the coils 20 includes: a slot-housed portion 21a disposed in a radially outward region of the associated slot 13 as viewed in an axial direction; and a slot-housed portion 21b disposed in a radially inward region of the associated slot 13 as viewed in the axial direction. The slot-housed portion 21b is disposed in the slot 13 located away from the slot 13, in which the slot-housed portion 21a is disposed, by a distance corresponding to a predetermined number of the slots 13 in the circumferential direction. Thus, each coil 20 is a double layer lap-wound coil.

As illustrated in FIG. 3, the coils 20 include first and second coils 20a and 20b. Each first coil 20a includes: the first lead wire portion 22a connected to the power connecting wire portion 31; and the second lead wire portion 22b connected to the associated remote connecting wire portion 32. Each second coil 20b includes: the first lead wire portion 22a connected to the neutral point connecting wire portion 33; and the second lead wire portion 22b connected to the associated remote connecting wire portion 32. Thus, the first and second coils 20a and 20b are provided in the form of coils in series.

In the first embodiment, each first coil 20a according to the first embodiment has a first winding number N1 obtained by subtracting half a lap from a predetermined winding number N (where N1 = N - {1/2}). Each second coil 20b is connected to the associated first coil 20a through the associated remote connecting wire portion 32. Each second coil 20b has a second winding number N2 obtained by adding half a lap to the predetermined winding number N (where N2 = N + {1/2}). Thus, with the first and second coils 20a and 20b connected to each other, a total winding number (N1 + N2) is 2N.

The first winding number N1 of each first coil 20a and the second winding number N2 of each second coil 20b both include a fraction (which is a number less than 1). Accordingly, the coils 20 are provided such that the first lead wire portions 22a of the first and second coils 20a and 20b are pulled out to the first axial side, and the second lead wire portions 22b of the first and second coils 20a and 20b are pulled out to the second axial side.

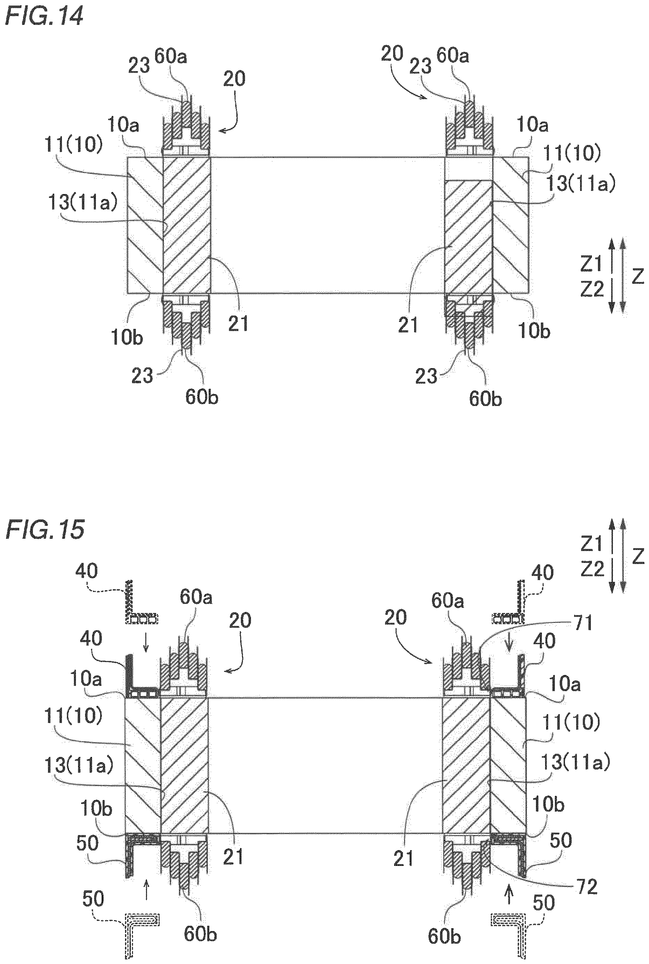

As illustrated in FIG. 2, the coils 20 have sheet insulating members 23 attached thereto. The insulating members 23 are disposed, for example, between the coil end portions 60a adjacent to each other (see FIG. 14) and between the stator core 10 and the slot-housed portions 21 in the radial direction and in the circumferential direction (see FIG. 4).

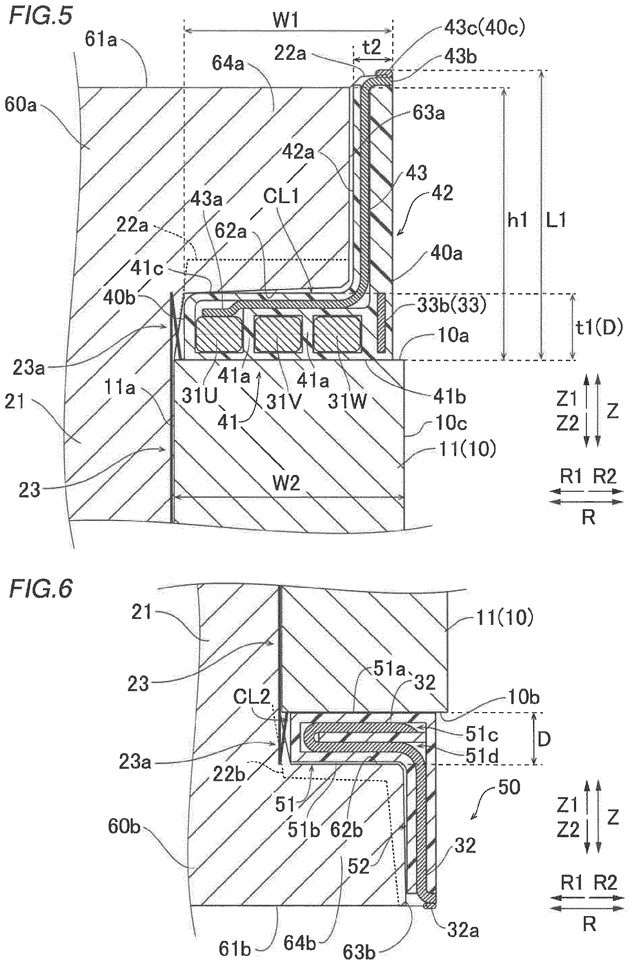

As illustrated in FIG. 5, the insulating members 23 include protrusions 23a protruding from the end face 10a of the stator core 10 in the central axis direction. The protrusion 23a of each insulating member 23 disposed between the associated slot-housed portion 21 and the stator core 10 includes an extremity located on the first side in the central axis direction. The extremity of each protrusion 23a is bent such that each protrusion 23a has overlapping portions in the radial direction. As illustrated in FIG. 6, the insulating members 23 include protrusions 23b protruding from the end face 10b of the stator core 10 in the central axis direction. The protrusion 23b of each insulating member 23 disposed between the associated slot-housed portion 21 and the stator core 10 includes an extremity located on the second side in the central axis direction. The extremity of each protrusion 23b is bent such that each protrusion 23b has overlapping portions in the radial direction.

Arrangement of Connecting Wire Unit, First Retaining Member, and Second Retaining Member

As illustrated in FIG. 3, the first retaining member 40 is provided with a plurality of power terminals 71 (e.g., power terminals 71 for three phases) connected to an external power source (or power supply) for the stator 100. The power connecting wire portion 31 is connected to the power terminals 71. Each remote connecting wire portion 32 is arranged to connect the associated first and second coils 20a and 20b to each other. The neutral point connecting wire portion 33 defines a neutral point (e.g., a neutral point of a Y connection for three-phase alternating currents).

As illustrated in FIG. 2, the first retaining member 40 is structured to retain the power connecting wire portion 31 and the neutral point connecting wire portion 33. The second retaining member 50 is structured to retain the remote connecting wire portions 32. The first retaining member 40 is disposed on the first axial side relative to the stator core 10. The second retaining member 50 is disposed on the second axial side relative to the stator core 10. Thus, the power connecting wire portion 31 and the neutral point connecting wire portion 33 are disposed on the first axial side relative to the stator core 10, and the remote connecting wire portions 32 are disposed on the second axial side relative to the stator core 10.

As illustrated in FIGS. 5 and 6, the first embodiment involves disposing at least a portion of the first retaining member 40 (which retains the power connecting wire portion 31 and a bus portion 33b of the neutral point connecting wire portion 33) between outer ends 61a of the coil end portions 60a on the first axial side and the end face 10a of the stator core 10 on the first axial side, and involves disposing at least a portion of the second retaining member 50 (which retains the remote connecting wire portions 32) between outer ends 61b of the coil end portions 60b on the second axial side and the end face 10b of the stator core 10 on the second axial side. The end face 10a is an example of a "first end face" in the claims. The end face 10b is an example of a "second end face" in the claims.

Specifically, as illustrated in FIG. 5, each coil end portion 60a is disposed away from the end face 10a of the stator core 10 in the central axis direction by an insulation distance D. Because each coil end portion 60a and the end face 10a of the stator core 10 are disposed away from each other by the insulation distance D, at least a portion of the first retaining member 40 (which retains the power connecting wire portion 31 and the bus portion 33b of the neutral point connecting wire portion 33) is disposed in a clearance CL1 defined between the coil end portions 60a and the end face 10a in the central axis direction. At least a portion of the first retaining member 40 (which retains at least a portion of the connecting wire unit 30) is disposed to overlap with the protrusions 23a as viewed in the radial direction. As illustrated in FIG. 6, each coil end portion 60b is disposed away from the end face 10b of the stator core 10 in the central axis direction by the insulation distance D. Because each coil end portion 60b and the end face 10b of the stator core 10 are disposed away from each other by the insulation distance ?, at least a portion of the second retaining member 50 (which retains the remote connecting wire portions 32) is disposed in a clearance CL2 defined between the coil end portions 60b and the end face 10b in the central axis direction. At least a portion of the second retaining member 50 (which retains at least a portion of the connecting wire unit 30) is disposed to overlap with the protrusions 23b as viewed in the radial direction. As used herein, the term "clearance CL1" refers to a region between an inner end 62a of each coil end portion 60a (which is a second axial end of each coil end portion 60a) and the end face 10a of the stator core 10. The term "clearance CL2" refers to a region between an inner end 62b of each coil end portion 60b (which is a first axial end of each coil end portion 60b) and the end face 10b of the stator core 10. In other words, the term "clearance CL1 (or clearance CL2)" is used to refer to a region between each coil end portion 60a (or 60b) and the end face 10a (or 10b) but is not limited to a "vacant space" where no component is disposed.

Specifically, each coil end portion 60a includes a radial protrusion 64a protruding from the associated slot 13 in the direction of the arrow Z1 and protruding to the radially outer side (i.e., in the direction of the arrow R2), which is a first radial side, relative to the associated slot 13 along the back yoke 11. Each coil end portion 60b includes a radial protrusion 64b protruding from the associated slot 13 in the direction of the arrow Z2 and protruding to the radially outer side (i.e., in the direction of the arrow R2), which is the first radial side, relative to the associated slot 13 along the back yoke 11. At least a portion of the first retaining member 40 (which retains the power connecting wire portion 31 and the bus portion 33b of the neutral point connecting wire portion 33) is disposed between the radial protrusion 64a and the end face 10a of the back yoke 11 in the central axis direction. At least a portion of the second retaining member 50 (which retains the remote connecting wire portions 32) is disposed between the radial protrusion 64b and the end face 10a of the back yoke 11 in the central axis direction.

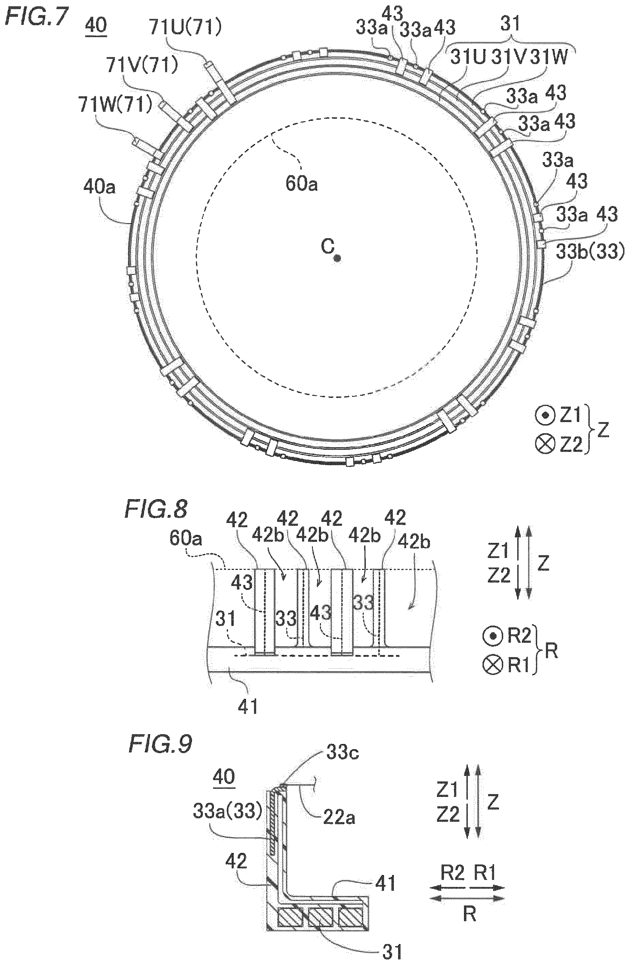

As illustrated in FIG. 7, the power connecting wire portion 31 includes a plurality of conductors in an annular (or concentric) arrangement. The power connecting wire portion 31 includes, for example, rectangular conductor wires (or rectangular conductors). The power connecting wire portion 31 includes a U-phase wire region 31U, a V-phase wire region 31V, and a W-phase wire region 31W insulated from each other. In one example, the U-phase wire region 31U, the V-phase wire region 31V, and the W-phase wire region 31W are disposed adjacent to each other in this order in the radial direction.

The U-phase wire region 31U is connected to a U-phase power terminal 71U that is the power terminal 71 for a U phase. The V-phase wire region 31V is connected to a V-phase power terminal 71V that is the power terminal 71 for a V phase. The W-phase wire region 31W is connected to a W-phase power terminal 71W that is the power terminal 71 for a W phase. The U-phase power terminal 71U, the V-phase power terminal 71V, and the W-phase power terminal 71W are each disposed to protrude radially outward of an outer end 40a of the first retaining member 40 and connected to a power line (which will be described below).

The first retaining member 40 has an annular shape as viewed in the axial direction. As illustrated in FIG. 5, the first retaining member 40 according to the first embodiment is disposed such that the outer end 40a of the first retaining member 40 on the radially outer side is located at substantially the same radial position as an outer end face 10c of the stator core 10 or located radially inward of the outer end face 10c. The first retaining member 40 is disposed such that an inner end 40b of the first retaining member 40 on the radially inner side is located at substantially the same radial position as an inner wall surface 11a of the back yoke 11 (which defines the slots 13 of the stator core 10) or located radially outward of the inner wall surface 11a. A radial width W1 of the first retaining member 40 (or a first portion 41 thereof) is equal to or smaller than a width W2 of the back yoke 11.

In the first embodiment, the first retaining member 40 includes: the first portion 41 disposed in the clearance CL1; and a second portion 42 disposed radially outward of and adjacent to the coil end portions 60a in the radial direction of the stator core 10. The second portion 42 is continuous with the first portion 41. The first and second portions 41 and 42 form an L shape in radial cross section. Specifically, a radially outward region of the first portion 41 and an axially inward region of the second portion 42 are continuous with each other such that the first retaining member 40 is L-shaped (or substantially L-shaped) in radial cross section.

The first and second portions 41 and 42 are made of, for example, insulating resin and integral with each other. Specifically, the first and second portions 41 and 42 are made of polyphenylene sulfide (PPS). The first and second portions 41 and 42 are preferably made of PPS that has relatively high toughness. The first portion 41 is preferably provided in the form of a member that is able to undergo flexural deformation in the axial direction. The second portion 42 is preferably provided in the form of a member that is able to undergo flexural deformation in the radial direction.

The first portion 41 is formed to retain the U-phase wire region 31U, the V-phase wire region 31V, and the W-phase wire region 31W. Specifically, the first portion 41 is formed to cover each of the U-phase wire region 31U, the V-phase wire region 31V, and the W-phase wire region 31W. This defines partition walls 41a between the U-phase wire region 31U, the V-phase wire region 31V, and the W-phase wire region 31W in the radial direction.

An axial thickness t1 of the first portion 41 is smaller than a protruding height h1 of each coil end portion 60a and smaller than an axial length L1 of the second portion 42. The radial width W1 of the first portion 41 is larger than a radial thickness t2 of the second portion 42. An end face 41b of the first portion 41 adjacent to the stator core 10 is located close to or in contact with the end face 10a of the stator core 10. An end face 41c of the first portion 41 adjacent to each coil end portion 60a is located close to or in contact with the inner end 62a of each coil end portion 60a adjacent to the stator core 10. A radially inward end face 42a of the second portion 42 is located close to or in contact with a radially outward outer end 63a of each coil end portion 60a. As used herein, the term "thickness t1" refers to a distance between the end face 41b and the end face 41c. The term "thickness t2" refers to a distance between the end face 42a and the outer end 40a. The thickness t1 is substantially equal to the insulation distance D.

An axially outward end 40c of the second portion 42 of the first retaining member 40 is disposed close to the outer end 61a of each coil end portion 60a. The axially outward end 40c is located at substantially the same height as each outer end 61a in a direction Z. Specifically, the protruding height h1 of each coil end portion 60a and the axial length L1 of the second portion 42 are substantially the same, or the length L1 is equal to or greater than the protruding height h1. The terms "close to" and "substantially the same" in this paragraph each refer to, for example, being located at a distance smaller than the thickness t1 (or t2).

As illustrated in FIG. 5, the first retaining member 40 according to the first embodiment is provided with lead wire connection terminals 43. Each lead wire connection terminal 43 is formed across the first portion 41 and the second portion 42. A portion 43a of each lead wire connection terminal 43 located in the first portion 41 is connected to the power connecting wire portion 31. A portion 43b of each lead wire connection terminal 43 located adjacent to the second portion 42 is connected to the first lead wire portion 22a of the associated first coil 20a. The number of lead wire connection terminals 43 is equal to the number of first lead wire portions 22a. Each lead wire connection terminal 43 has the function of electrically connecting the power connecting wire portion 31 with the associated first lead wire portion 22a. Each lead wire connection terminal 43 is provided, for example, by applying an insulating film or an insulating coating to a surface of a conductor (e.g., sheet copper). Each lead wire connection terminal 43 is an example of a "terminal member" in the claims.

To be specific, the portion 43a of each lead wire connection terminal 43 is joined to a lateral surface of the power connecting wire portion 31 (which is adjacent to the coil end portions 60a) inside the first portion 41. Each lead wire connection terminal 43 is substantially L-shaped inside the first and second portions 41 and 42 such that each lead wire connection terminal 43 conforms in shape to the first and second portions 41 and 42. The portion 43b of each lead wire connection terminal 43 axially outwardly extends out of the second portion 42.

Each first lead wire portion 22a is pulled out radially outward from the associated coil end portion 60a. Each first lead wire portion 22a is joined (e.g., welded or brazed) to the associated lead wire connection terminal 43 at a junction 43c on the portion 43b. Each first lead wire portion 22a is joined to the associated lead wire connection terminal 43, for example, by melting metal (e.g., brazing metal) with laser light and solidifying the metal. The first lead wire portion 22a of each first coil 20a is thus electrically connected to the associated lead wire connection terminal 43 and the power connecting wire portion 31.

As illustrated in FIG. 7, the power connecting wire portion 31 is connected to the U-phase power terminal 71U, so that each first coil 20a is electrically connected to the U-phase power terminal 71U. Similarly to the U-phase power terminal 71U, the V-phase power terminal 71V and the W-phase power terminal 71W are each connected to the first coils 20a of the associated phase through the lead wire connection terminals 43.

As illustrated in FIG. 8, the second portion 42 according to the first embodiment is provided with flow passages 42b through which cooling oil (or liquid) for the dynamo-electric machine 101 flows in the radial direction. Specifically, each flow passage 42b is provided in the form of a cut-out recessed in the axial direction (i.e., toward the first portion 41). Regions of the second portion 42 other than regions thereof in the vicinity of the lead wire connection terminals 43 and in the vicinity of the neutral point connecting wire portion 33, for example, are provided in the form of cut-outs recessed toward the first portion 41. In other words, the coil end portions 60a are exposed through the flow passages 42b as viewed from the radially outer side. Accordingly, cooling oil that has flowed from the radially outer side flows radially inward through the flow passages 42b and then flows to the coil end portions 60a and the slot-housed portions 21. Consequently, the cooling oil cools the stator 100.

As illustrated in FIG. 9, the neutral point connecting wire portion 33 is disposed in the second portion 42. The neutral point connecting wire portion 33 (which includes neutral point terminal portions 33a) is connected at junctions 33c to the first lead wire portions 22a of the second coils 20b. The neutral point connecting wire portion 33 is provided in the form of, for example, a bus bar member (made of, for example, sheet copper). The neutral point terminal portions 33a are integral with the bus portion 33b. The bus portion 33b is disposed radially outward of the power connecting wire portion 31 and has an annular shape as viewed in the axial direction.

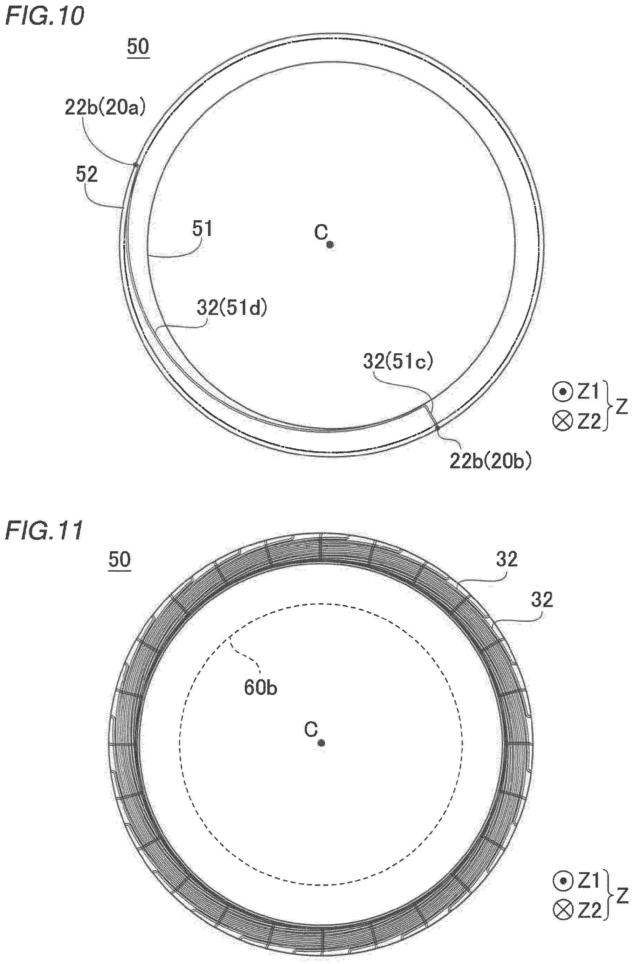

As illustrated in FIG. 10, each remote connecting wire portion 32 is arranged to establish a remote connection between the second lead wire portions 22b of the associated first and second coils 20a and 20b that are disposed away from each other and in series with each other. The second retaining member 50 is structured to retain the remote connecting wire portions 32. As illustrated in FIG. 6, the second retaining member 50 includes a first portion 51 disposed in the clearance CL2, and a second portion 52 continuous with the first portion 51. The first and second portions 51 and 52 form an L shape in radial cross section. An end face 51a of the first portion 51 adjacent to the stator core 10 is located close to or in contact with the end face 10b of the stator core 10. An end face 51b of the first portion 51 adjacent to the coil end portions 60b is located close to or in contact with the inner ends 62b of the coil end portions 60b.

Each remote connecting wire portion 32 is formed, for example, using a conductor wire (e.g., a round wire). Each remote connecting wire portion 32 is placed inside the second retaining member 50. The first portion 51 of the second retaining member 50 includes axially overlapping two-layered wiring housing regions 51c and 51d. In one example, each remote connecting wire portion 32 is placed in the wiring housing region 51c of the first portion 51 (which is disposed adjacent to the stator core 10) such that each remote connecting wire portion 32 extends in the radial direction. As illustrated in FIG. 10, each remote connecting wire portion 32 is placed in the wiring housing region 51d of the first portion 51 (which is disposed adjacent to the coil end portions 60b) such that each remote connecting wire portion 32 extends in the circumferential direction. As illustrated in FIG. 11, the remote connecting wire portions 32 adjacent to each other in the radial direction are placed in the wiring housing region 51d.

As illustrated in FIG. 6, an end 32a of each remote connecting wire portion 32 axially outwardly extends out of the second portion 52. Each end 32a is joined (e.g., laser-welded or brazed) to the associated second lead wire portion 22b at a junction 32b. The first and second coils 20a and 20b are thus electrically connected to each other through the second lead wire portions 22b and the remote connecting wire portions 32. The remote connecting wire portions 32, for example, establish connections (i.e., remote connections) between the first and second coils 20a and 20b (see FIG. 10) disposed to face each other with respect to a central axis C of the stator core 10. As used herein, the term "remote connection" refers to a connection between different coils 20 of the same phase, with at least another coil located therebetween.

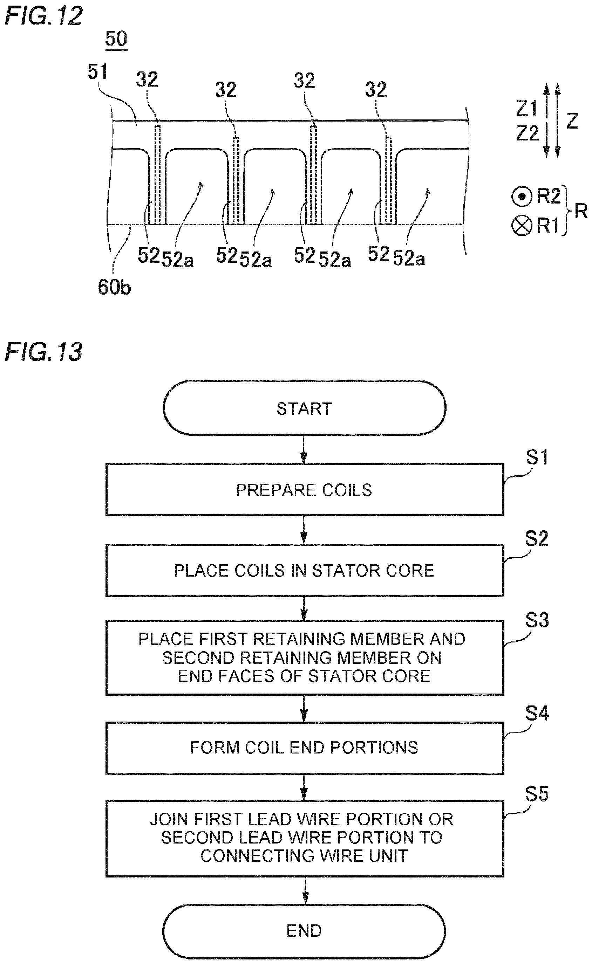

As illustrated in FIG. 12, similarly to the second portion 42 of the first retaining member 40, the second portion 52 of the second retaining member 50 is provided with flow passages 52a which are in the form of cut-outs recessed toward the first portion 51 and through which cooling oil (or liquid) for the dynamo-electric machine 101 flows in the radial direction.

### Stator Manufacturing Method

Referring to FIG. 1, FIGS. 3 to 6, FIG. 9, and FIGS. 13 to 17, a method for manufacturing the stator 100 according to the first embodiment will be described below. FIG. 13 illustrates a flow chart for steps of manufacturing the stator 100.

First, step S1 involves preparing the coils 20. Specifically, as illustrated in FIG. 3, step S1 involves preparing the coils 20 including: the first coil 20a having the first winding number N1 obtained by subtracting half a lap from the predetermined winding number N (where N1 = N - {1/2}); and the second coil 20b having the second winding number N2 obtained by adding half a lap to the predetermined winding number N (where N2 = N + {1/2}).

Step S2 involves placing the coils 20 in the stator core 10. To be more specific, as illustrated in FIG. 14, step S2 involves placing the coils 20 in the stator core 10 such that each coil end portion 60a protrudes from the first axial side end face 10a of the stator core 10 and each coil end portion 60b protrudes from the second axial side end face 10b of the stator core 10. Specifically, a pair of the slot-housed portions 21 of each coil 20 is placed in the slots 13 located at different circumferential positions.

In this step, the coil end portions 60a and 60b are disposed radially inward of the inner wall surface 11a of the stator core 10 that defines the slots 13. Specifically, before the step (S4) of forming the coil end portions 60a and 60b (which will be described below), the coil end portions 60a and 60b are placed at positions where the coil end portions 60a and 60b do not axially overlap with the back yoke 11 (i.e., only at positions directly above or directly below the slots 13).

As illustrated in FIG. 15, step S3 involves placing the first retaining member 40 on the end face 10a of the stator core 10 and placing the second retaining member 50 on the end face 10b of the stator core 10, thus placing the connecting wire unit 30 on the end face 10a or the end face 10b of the stator core 10. Specifically, the annular first retaining member 40 is placed radially outward of the coil end portions 60a (which are before being formed) and axially outward of the back yoke 11. The annular second retaining member 50 is placed radially outward of the coil end portions 60b (which are before being formed) and axially outward of the back yoke 11. The connecting wire unit 30 is placed on the stator core 10 such that the coil end portions 60a protruding from the end face 10a of the stator core 10 are located in a hole 71 radially inward of the annular connecting wire unit 30. The connecting wire unit 30 is placed on the stator core 10 such that the coil end portions 60b protruding from the end face 10b of the stator core 10 are located in a hole 72 radially inward of the annular connecting wire unit 30.

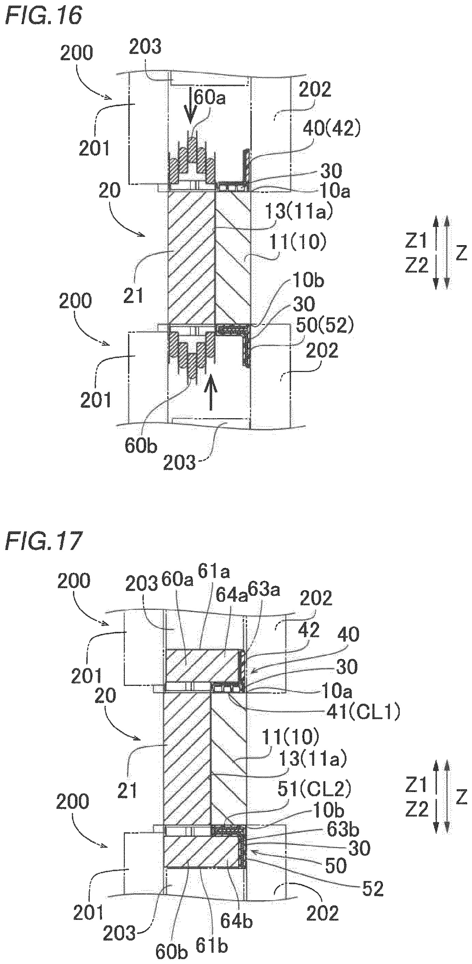

As illustrated in FIGS. 16 and 17, step S4 according to the first embodiment involves: forming the coil end portions 60a such that the first retaining member 40 (which retains the connecting wire unit 30) is placed between the axial outer end 61a of each coil end portion 60a and the end face 10a; and forming the coil end portions 60b such that the second retaining member 50 (which retains the connecting wire unit 30) is placed between the axial outer end 61b of each coil end portion 60b and the end face 10b. This forms the radial protrusions 64a and 64b.

As illustrated in FIG. 5, with the power connecting wire portion 31 and the neutral point connecting wire portion 33 retained by the first retaining member 40, at least the first portion 41 of the first retaining member 40 is placed in the clearance CL1 defined between the coil end portions 60a and the end face 10a, thus placing the power connecting wire portion 31 in the clearance CL1 defined between the coil end portions 60a (or the radial protrusions 64a) and the end face 10a. As illustrated in FIG. 6, with the remote connecting wire portions 32 retained by the second retaining member 50, at least the first portion 51 of the second retaining member 50 is placed in the clearance CL2 defined between the coil end portions 60b and the end face 10b, thus placing a region of each remote connecting wire portion 32 in the clearance CL2 defined between the coil end portions 60b (or the radial protrusions 64b) and the end face 10b.

Specifically, as illustrated in FIG. 16, the stator core 10 having the coils 20, the first retaining member 40, and the second retaining member 50 disposed thereon is placed in a forming apparatus 200. The forming apparatus 200 includes: cylindrical (or columnar) inner jigs 201 to be placed radially inward of the stator core 10; outer jigs 202 to be placed radially outward of the stator core 10; and pressing jigs 203 that move axially in spaces defined between the inner jigs 201 and the outer jigs 202 in the radial direction.

With the stator core 10 placed in a space defined between the inner jigs 201 and the outer jigs 202 in the radial direction, the second portion 42 of the first retaining member 40 is brought close to (or into contact with) the associated outer jig 202, and the second portion 52 of the second retaining member 50 is brought close to (or into contact with) the associated outer jig 202.

As illustrated in FIG. 17, the pressing jigs 203 press the coil end portions 60a and 60b from the axially outer side to the axially inner side, thus axially compressing the coil end portions 60a and 60b and forming (or deforming) the coil end portions 60a and 60b such that the coil end portions 60a and 60b expand radially outward. Accordingly, the radially outward deformation of the coil end portions 60a and 60b causes the first portion 41 of the first retaining member 40 to be placed in the clearance CL1 defined between the coil end portions 60a and the end face 10a, and causes the first portion 51 of the second retaining member 50 to be placed in the clearance CL2 defined between the coil end portions 60b and the end face 10b. The second portion 42 of the first retaining member 40 is placed between the outer ends 63a of the coil end portions 60a and the associated outer jig 202. The second portion 52 of the second retaining member 50 is placed between outer ends 63b of the coil end portions 60b and the associated outer jig 202. The stator core 10 is then removed from the forming apparatus 200.

As illustrated in FIGS. 5 and 6, step S5 involves joining each lead wire connection terminal 43 in the first retaining member 40 to the first lead wire portion 22a of the associated first coil 20a. As illustrated in FIG. 9, step S5 involves joining each neutral point terminal portion 33a in the first retaining member 40 to the first lead wire portion 22a of the associated second coil 20b. As illustrated in FIG. 3, step S5 involves joining one of the ends 32a of each remote connecting wire portion 32 in the second retaining member 50 to the second lead wire portion 22b of the associated first coil 20a, and involves joining the other end 32a of each remote connecting wire portion 32 in the second retaining member 50 to the second lead wire portion 22b of the associated second coil 20b. Thus, the stator 100 is manufactured as illustrated in FIG. 1. The stator 100 is then combined with the rotor 102 so as to manufacture the dynamo-electric machine 101. The dynamo-electric machine 101 is installed, for example, on a vehicle such that a power source (or power supply) is connected to the power terminals 71.

### Second Embodiment

Referring to FIG. 1 and FIGS. 18 to 20, a stator 300 according to a second embodiment will be described below. Unlike the stator 100 according to the first embodiment (which includes the first retaining member 40 provided with the neutral point connecting wire portion 33), the stator 300 according to the second embodiment includes a second retaining member 350 provided with a neutral point connecting wire portion 333. In the following description, components similar to those of the first embodiment will be identified by the same reference characters, and description thereof will be omitted.

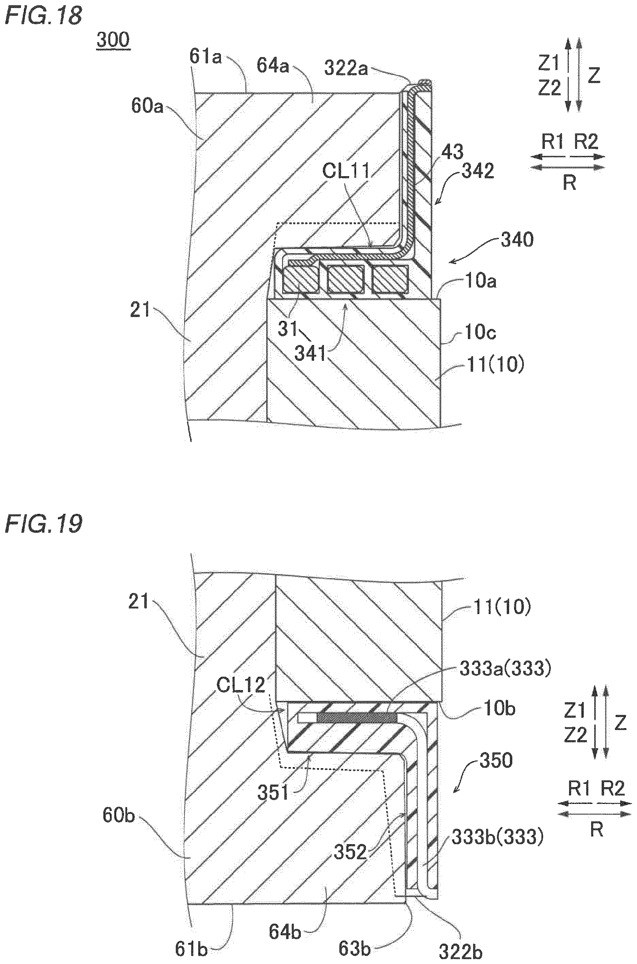

As illustrated in FIG. 1, the stator 300 includes a plurality of coils 320. As illustrated in FIG. 18, the coils 320 each include a first lead wire portion 322a pulled out to the first axial side. Each first lead wire portion 322a is connected to the power connecting wire portion 31 through the associated lead wire connection terminal 43. As illustrated in FIG. 19, the coils 320 each include a second lead wire portion 322b pulled out to the second axial side. Each second lead wire portion 322b is connected to the neutral point connecting wire portion 333. Unlike the first embodiment, the second embodiment involves connecting the coils 320 of the same phase in parallel instead of establishing remote connections therebetween. All of the coils 320 have, for example, the same winding number Na1. The winding number Na1 is obtained by adding half a lap to a predetermined winding number Na (where Na1 = Na + {1/2}).

The stator 300 includes a first retaining member 340 retaining the power connecting wire portion 31, and the second retaining member 350 retaining the neutral point connecting wire portion 333. The first retaining member 340 includes a first portion 341 disposed in a clearance CL11 defined between the coil end portions 60a and the end face 10a of the stator core 10. The second retaining member 350 includes a first portion 351 disposed in a clearance CL11 defined between the coil end portions 60b and the end face 10b of the stator core 10. The first retaining member 340 is disposed in the clearance CL11 defined between the coil end portions 60a and the end face 10a of the stator core 10. The second retaining member 350 is disposed in the clearance CL12 defined between the coil end portions 60b and the end face 10b of the stator core 10. The first retaining member 340 including the first and second portions 341 and 342 is L-shaped (or substantially L-shaped) in radial cross section. The second retaining member 350 including the first and second portions 351 and 352 is L-shaped (or substantially L-shaped) in radial cross section.

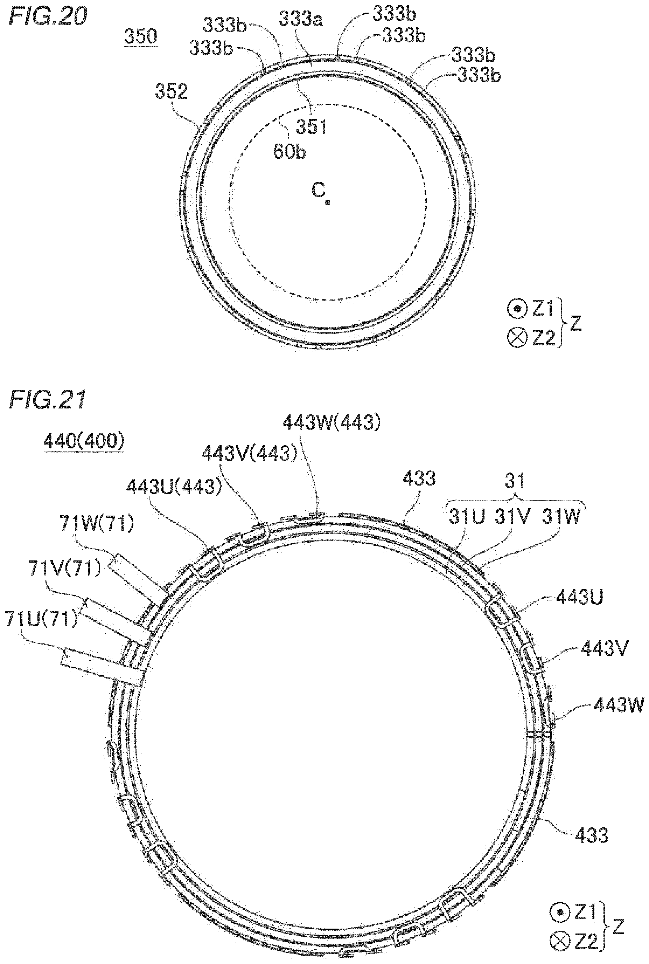

As illustrated in FIG. 19, the neutral point connecting wire portion 333 includes: a bus portion 333a disposed in the first portion 351 of the second retaining member 350; and terminal portions 333b disposed in the second portion 352 of the second retaining member 350 and connected to the bus portion 333a. Each terminal portion 333b is connected with the associated second lead wire portion 322b. As illustrated in FIG. 20, the bus portion 333a has an annular shape as viewed in the axial direction. Each terminal portion 333b is exposed in the direction of the arrow Z1. Other components of the stator 300 according to the second embodiment are similar to those of the stator 100 according to the first embodiment. A method for manufacturing the stator 300 according to the second embodiment is similar to the method for manufacturing the stator 100 according to the first embodiment.

### Third Embodiment

Referring to FIGS. 21 to 40, a stator 400 according to a third embodiment will be described below. In the third embodiment, the first lead wire portions 22a are mechanically joined to lead wire connection terminals 443 by swaging and metallurgically joined to the lead wire connection terminals 443. In the following description, components similar to those of the first and second embodiments will be identified by the same reference characters, and description thereof will be omitted.

As illustrated in FIG. 21, the stator 400 includes the lead wire connection terminals 443. The lead wire connection terminals 443 include U-phase lead wire connection terminals 443U, V-phase lead wire connection terminals 443V, and W-phase lead wire connection terminals 443W. Each lead wire connection terminal 443 is an example of the "terminal member" in the claims.

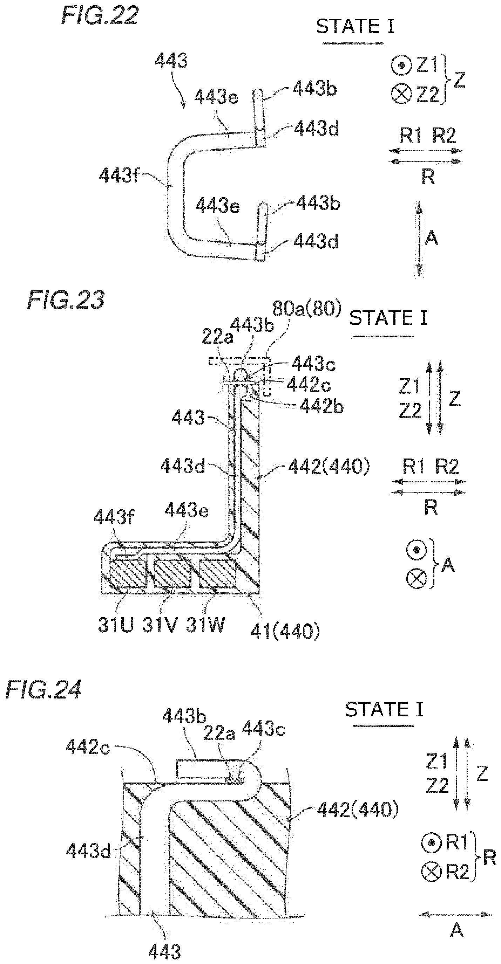

As illustrated in FIG. 22, each lead wire connection terminal 443 includes a pair of connecters 443b, a pair of first terminal portions 443d, a pair of second terminal portions 443e, and a third terminal portion 443f.

Each connecter 443b is formed to extend in the circumferential direction (i.e., a direction A). Each pair of first terminal portions 443d is continuous with the associated pair of connecters 443b. Each first terminal portion 443d is formed to extend in the central axis direction that corresponds to the direction Z (see FIG. 23). Each pair of second terminal portions 443e is continuous with the associated pair of first terminal portions 443d. Each second terminal portion 443e is formed to extend in the radial direction (i.e., a direction R). Each third terminal portion 443f is formed to extend in the circumferential direction (i.e., the direction A) such that the associated second terminal portions 443e provided in a pair are connected to each other.

As illustrated in FIG. 23, the connecters 443b of each lead wire connection terminal 443 are connected to the associated first lead wire portions 22a. The third terminal portion 443f of each lead wire connection terminal 443 is connected to the power connecting wire portion 31.

In the third embodiment, the lead wire connection terminals 443 are connected to the first lead wire portions 22a by being mechanically joined to the first lead wire portions 22a by swaging and by being metallurgically joined to the first lead wire portions 22a with a brazing material. Specifically, as illustrated in FIG. 24, each connecter 443b includes a pair of portions extending in the circumferential direction (i.e., the direction A). The pair of portions is provided by bending. Each first lead wire portion 22a extending in the radial direction (i.e., the direction R) is mechanically joined to the associated connecter 443b by swaging such that each first lead wire portion 22a is sandwiched, from both sides in the central axis direction (i.e., the direction Z), between the pair of portions of the associated connecter 443b extending in the circumferential direction (i.e., the direction A). Each connecter 443b is metallurgically joined at a junction 443c to the associated first lead wire portion 22a with a brazing material that has been molten and solidified during joining process. Examples of the brazing material to be used include a soft brazing material (e.g., solder) having a melting temperature of 200 degrees or less. As used herein, the term "metallurgically joined" refers to a metal-to-metal junction made by heating metal(s) so as to melt the metal(s) and then by solidifying the metal(s).

As illustrated in FIG. 23, the stator 400 includes a first retaining member 440. Similarly to the stator 100 according to the first embodiment, the first retaining member 440 has an annular shape as viewed in the axial direction. The first retaining member 440 includes a second portion 442. An outer end 442c of the second portion 442 facing in the central axis direction (i.e., the direction Z) is provided with a groove 442b. The groove 442b is formed to extend in the circumferential direction of the first retaining member 440 (i.e., the direction A). The lead wire connection terminals 443 are provided in the first retaining member 440.

In the present embodiment, a portion of each connecter 443b is bent in the circumferential direction (i.e., the direction A) and thus housed in the groove 442b. Specifically, as illustrated in FIG. 24, regions of the pair of portions of each connecter 443b extending in the circumferential direction (i.e., the direction A) and adjacent to the first terminal portions 443d are housed in the groove 442b such that the regions are covered with the first retaining member 440 as viewed in the radial direction (i.e., the direction R). The other regions of each connecter 443b extend out of the first retaining member 440 as viewed in the radial direction (i.e., the direction R).

As illustrated in FIG. 23, each lead wire connection terminal 443 according to the third embodiment includes: a portion which is contained in the first retaining member 440 and in which a round wire substantially circular in cross section is deformed; and a portion which extends out of the first retaining member 440 and in which the round wire is not deformed. Specifically, the connecters 443b of each lead wire connection terminal 443 extend out of the first retaining member 440 as viewed in the axial direction (i.e., the direction Z), although not illustrated in FIG. 23. The round wire substantially circular in cross section is used for the connecters 443b on an as-is basis. The first terminal portions 443d, the second terminal portions 443e, and the third terminal portion 443f of each lead wire connection terminal 443 are retained (or contained) in the first retaining member 440. The round wire substantially circular in cross section is used in a deformed state for the first terminal portions 443d, the second terminal portions 443e, and the third terminal portion 443f as viewed in the radial direction (i.e., the direction A).

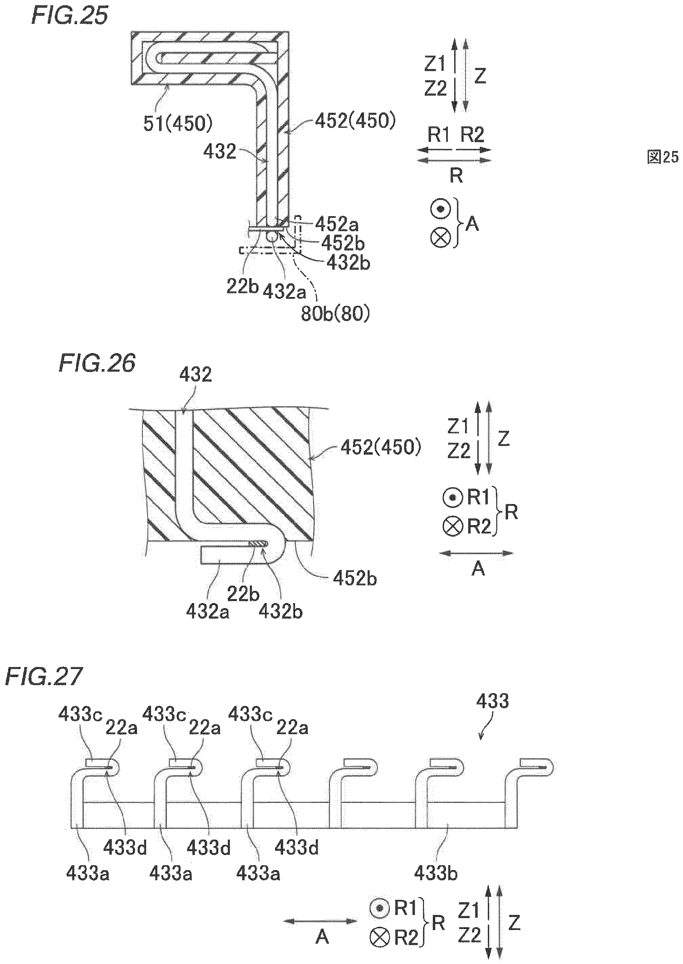

As illustrated in FIG. 25, the stator 400 includes remote connecting wire portions 432 and a second retaining member 450. Each remote connecting wire portion 432 is each remote connecting wire portion 432 is an example of the "second connecting wire portion" and an example of the "remote connecting portion" in the claims.

In the third embodiment, each remote connecting wire portion 432 is connected to the associated second lead wire portion 22b by being mechanically joined to the associated second lead wire portion 22b by swaging and by being metallurgically joined to the associated second lead wire portion 22b with a brazing material. Specifically, as illustrated in FIG. 26, an end 432a of each remote connecting wire portion 432 facing in the central axis direction (i.e., the direction Z) includes a pair of portions extending in the circumferential direction (i.e., the direction A). The pair of portions is provided by bending. Each second lead wire portion 22b extending in the radial direction (i.e., the direction R) is mechanically joined to the associated remote connecting wire portion 432 by swaging such that each second lead wire portion 22b is sandwiched, from both sides in the central axis direction (i.e., the direction Z), between the pair of portions of the end 432a of the associated remote connecting wire portion 432 extending in the circumferential direction (i.e., the direction A). The end 432a of each remote connecting wire portion 432 is metallurgically joined at a junction 432b to the associated second lead wire portion 22b with a brazing material that has been molten and solidified during joining process.

Similarly to the stator 100 according to the first embodiment, the second retaining member 450 has an annular shape as viewed in the axial direction as illustrated in FIG. 25. The second retaining member 450 includes a second portion 452. An outer end 452b of the second portion 452 facing in the central axis direction (i.e., the direction Z) is provided with a groove 452a. The groove 452a is formed to extend in the circumferential direction of the second retaining member 450 (i.e., the direction A). The remote connecting wire portions 432 are provided in the second retaining member 450. A portion of the end 432a of each remote connecting wire portion 432 is bent in the circumferential direction (i.e., the direction A) and thus housed in the groove 452a. Specifically, as illustrated in FIG. 26, a region of the pair of portions of the end 432a of each remote connecting wire portion 432 extending in the circumferential direction (i.e., the direction A) and adjacent to the stator core 10 (see FIG. 2) is housed in the groove 452a such that this region is covered with the second retaining member 450 as viewed in the radial direction (i.e., the direction R). The other region of the end 432a of each remote connecting wire portion 432 extends out of the second retaining member 450 as viewed in the radial direction (i.e., the direction R). The end 432a of each remote connecting wire portion 432 extends out of the second retaining member 450 as viewed in the axial direction (i.e., the direction Z), although not illustrated in FIG. 26. Regions of each remote connecting wire portion 432 other than the end 432a are retained (or contained) in the second retaining member 450.

As illustrated in FIG. 21, the stator 400 includes neutral point connecting wire portions 433. The number of neutral point connecting wire portions 433 provided in the stator 400 is four. As illustrated in FIG. 27, each neutral point connecting wire portion 433 includes neutral point terminal portions 433a and a bus portion 433b. The number of neutral point terminal portions 433a of each neutral point connecting wire portion 433 provided in the stator 400 is six. The six neutral point terminal portions 433a of each neutral point connecting wire portion 433 are joined to the single bus portion 433b.

In the third embodiment, the neutral point connecting wire portions 433 are connected to the first lead wire portions 22a by being mechanically joined to the first lead wire portions 22a by swaging and by being metallurgically joined to the first lead wire portions 22a with a brazing material. Specifically, an end 433c of each neutral point terminal portion 433a located opposite to the bus portion 433b includes a pair of portions extending in the circumferential direction (i.e., the direction A). The pair of portions is provided by bending. Each first lead wire portion 22a extending in the radial direction (i.e., the direction R) is mechanically joined to the associated end 433c by swaging such that each first lead wire portion 22a is sandwiched, from both sides in the central axis direction (i.e., the direction Z), between the pair of portions of the end 433c of the associated neutral point terminal portion 433a extending in the circumferential direction (i.e., the direction A). The end 433c of each neutral point terminal portion 433a is metallurgically joined at a junction 433d to the associated first lead wire portion 22a with a brazing material that has been molten and solidified during joining process.

As illustrated in FIGS. 23 and 25, the stator 400 according to the third embodiment includes an insulating member 80 having an annular shape extending in the circumferential direction (i.e., the direction A). The insulating member 80 includes an insulator 80a provided adjacent to the first retaining member 440, and an insulator 80b provided adjacent to the second retaining member 450. As illustrated in FIG. 23, the insulator 80a is formed to cover the groove 442b defined in the outer end 442c of the first retaining member 440 facing in the central axis direction (i.e., the direction Z). As illustrated in FIG. 25, the insulator 80b is formed to cover the groove 442a defined in the outer end 452b of the second retaining member 450 facing in the central axis direction (i.e., the direction Z).

### Stator Manufacturing Method

Referring to FIGS. 22 to 24 and FIGS. 28 to 40, a method for manufacturing the stator 400 according to the third embodiment will be described below.

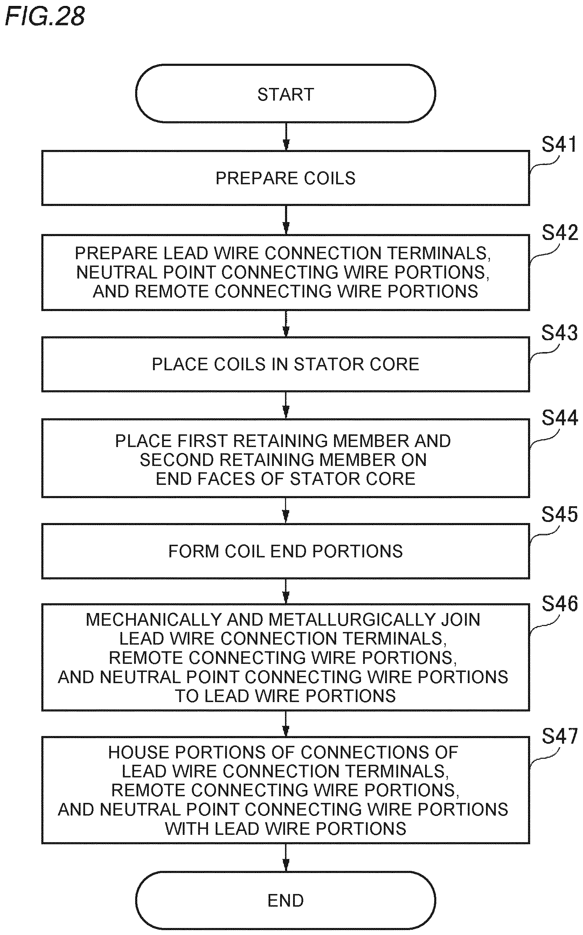

FIG. 28 illustrates a flow chart for steps of manufacturing the stator 400. Because step S41 and steps S43 to S45 are respectively similar to steps S1 to S4 included in the method for manufacturing the stator 100 according to the first embodiment, description thereof will be omitted.

Step S42 involves preparing conductor wires to be used for the lead wire connection terminals 443 and the remote connecting wire portions 432.

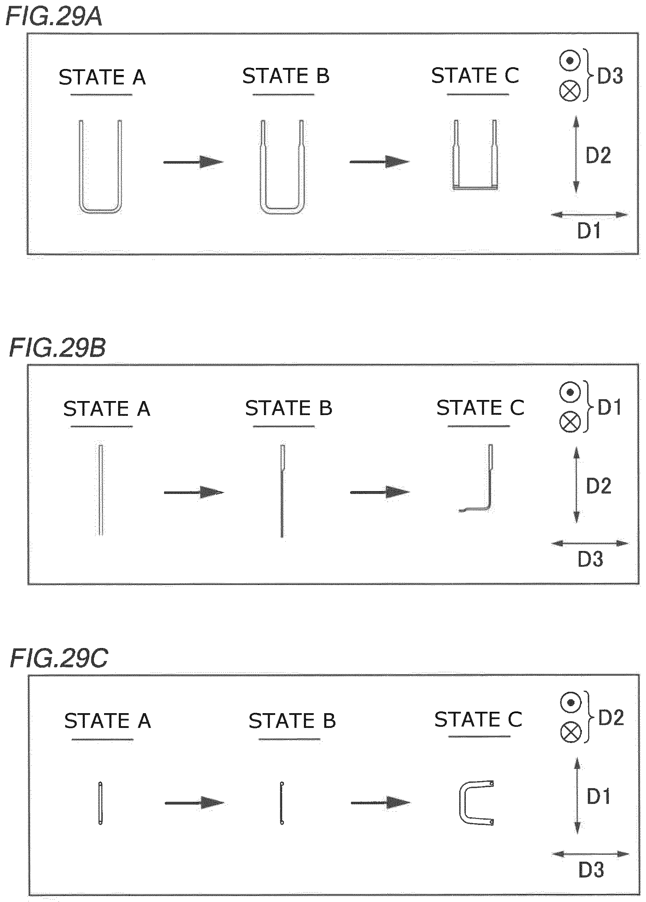

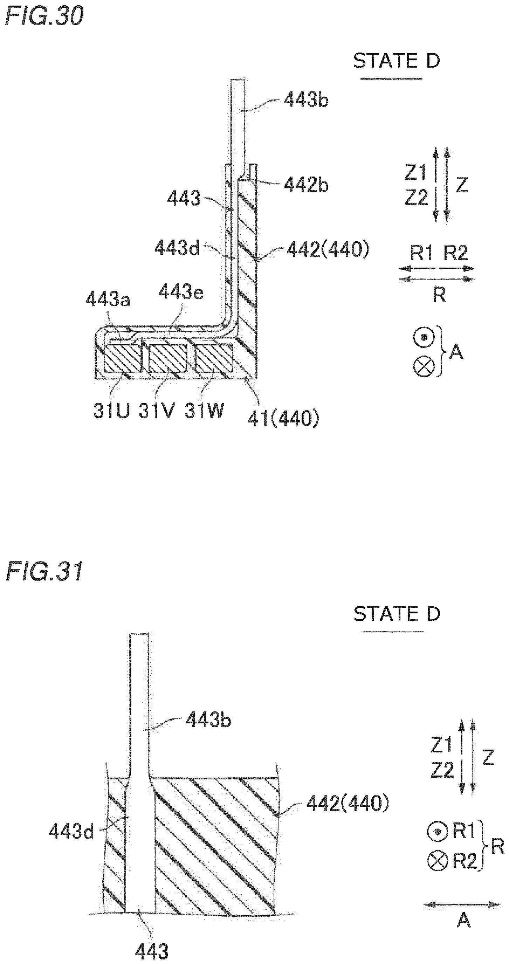

Specifically, as illustrated in FIG. 29, step S42 involves preparing U-shaped conductor wires (or round wires) to be used for the lead wire connection terminals 443. Each U-shaped conductor wire (or round wire) that is in a state A includes: a pair of portions extending in a direction D2; and a portion extending in a direction D1 so as to connect the pair of portions extending in the direction D2. Each U-shaped conductor wire (or round wire) is deformed in a direction D3. This provides U-shaped conductor wires (or round wires) in a state B. Each U-shaped conductor wire (or round wire) in the state B includes a portion where the round wire is not deformed, and a portion where the round wire is deformed. The pair of portions (which extends in the direction D2) is bent in the direction D3 by about 90 degrees at positions closer to the portion (which extends in the direction D1) relative to the center of the pair of portions (which extends in the direction D2) in the direction D2. This provides substantially U-shaped conductor wires (or round wires) in a state C. Each conductor wire (or round wire) in the state C is substantially L-shaped as viewed in the direction D1 and substantially U-shaped in the direction D2. As illustrated in FIG. 30, each conductor wire (or round wire) in the state C is contained in the first retaining member 440 such that its portions (i.e., the connecters 443b) where the round wire is not deformed extend out of the first retaining member 440. The conductor wires (or round wires) in this state (i.e., a state D) function as the lead wire connection terminals 443.

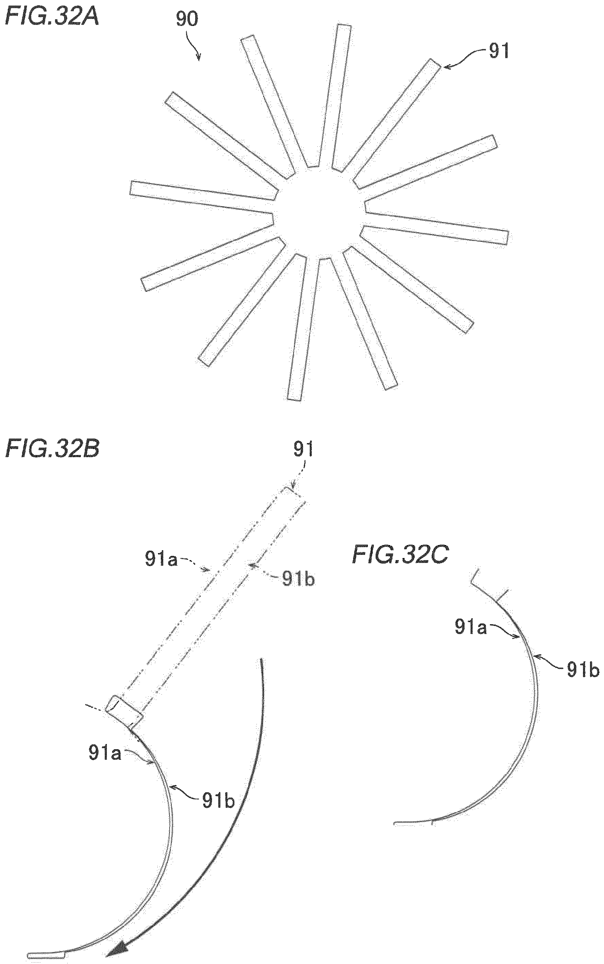

As illustrated in FIG. 32(A), step S42 involves preparing star-shaped conductor wires (or round wires) to be used for the remote connecting wire portions 432. Each star-shaped conductor wire (or round wire) includes portions 91. Each portion 91 includes: a pair of substantially parallel regions extending in the radial direction; and a radially outward region connecting the pair of parallel regions. As illustrated in FIG. 32(B), with the central portion of each star-shaped conductor wire (or round wire) fixed by a jig (not illustrated), each portion 91 is moved such that each portion 91 is twisted in the circumferential direction. This provides conductor wires (or round wires) including pairs of portions 91a and 91b. The portions 91a and 91b extend substantially in the radial direction and are deviated from each other in the radial direction. As illustrated in FIG. 32(C), ends of the portions 91a and 91b are cut off, and the portions 91a and 91b are bent, thus providing conductor wires (or round wires) to be used for the remote connecting wire portions 432. Similarly to the lead wire connection terminals 443, the remote connecting wire portions 432 are contained in the second retaining member 450. The neutral point connecting wire portions 433 are also contained in the first retaining member 440 before step S43.

Step S46 involves mechanically and metallurgically joining the lead wire connection terminals 443 and the neutral point connecting wire portions 433 to the first lead wire portions 22a. Step S46 involves mechanically and metallurgically joining the remote connecting wire portions 32 to the second lead wire portions 22b.

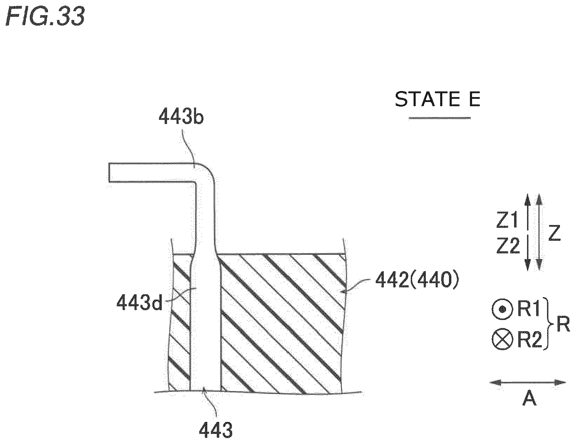

Specifically, as illustrated in FIG. 33, substantially central portions of the connecters 443b of each lead wire connection terminal 443 are bent by about 90 degrees using a jig (not illustrated). This changes the state of each lead wire connection terminal 443 from the state D where each connecter 443b extends in the central axis direction (i.e., the direction Z) to a state E where each connecter 443b includes a portion extending in the central axis direction (i.e., the direction Z) and a portion extending in the circumferential direction (i.e., the direction A).

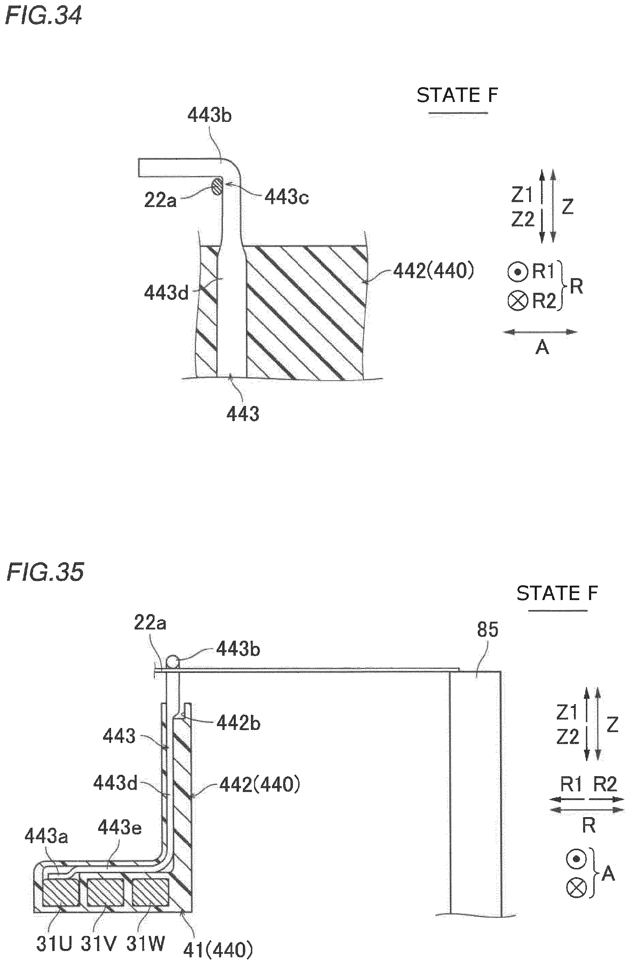

As illustrated in FIG. 34, each first lead wire portion 22a is placed on a position (i.e., the junction 443c) inwardly close to a bent corner of the associated connecter 443b. This provides the lead wire connection terminals 443 in a state F. As illustrated in FIG. 35, each first lead wire portion 22a is fixed by a jig 85 in the state F such that each first lead wire portion 22a is placed on the junction 443c of the associated connecter 443b.

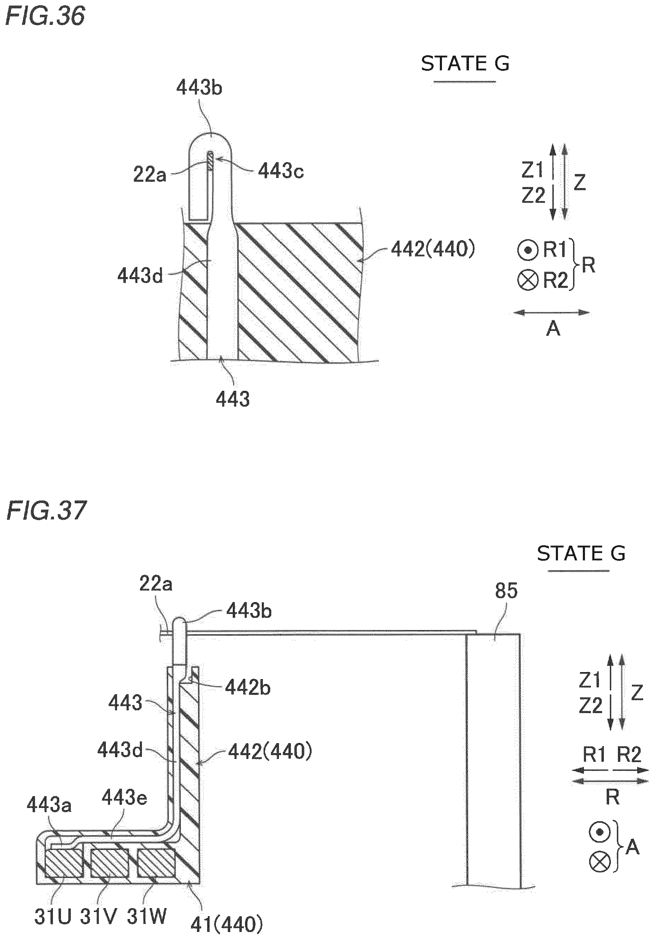

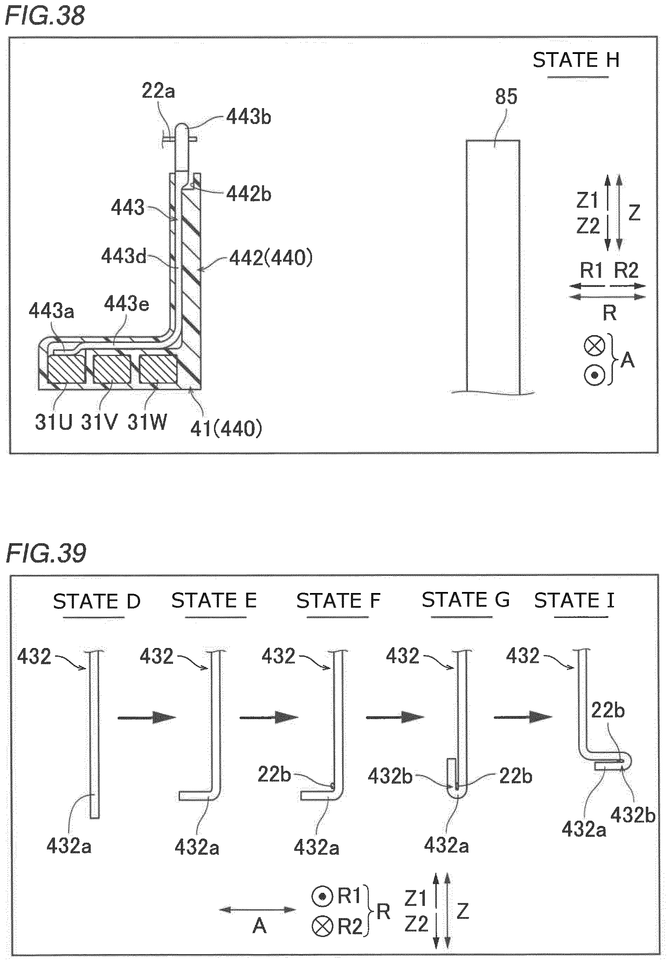

As illustrated in FIGS. 36 and 37, the portion of each connecter 443b bent by about 90 degrees is further bent by about 90 degrees using a jig (not illustrated), so that each first lead wire portion 22a is sandwiched between facing portions of the associated connecter 443b. This provides the lead wire connection terminals 443 in a state G When each connecter 443b is further bent by about 90 degrees, a pressure is applied in a direction in which each first lead wire portion 22a is sandwiched between the facing portions of the associated connecter 443b (i.e., in the direction A), and the junction 443c of each connecter 443b is heated such that a brazing material (e.g., a soft brazing material, such as solder) applied to the junction 443c of each connecter 443b in advance melts and then solidifies. Using, for example, a heated jig, each lead wire connection terminal 443 is subjected to thermal caulking that enables swaging (or pressurization) and application of heat simultaneously. This mechanically and metallurgically joins the connecters 443b of each lead wire connection terminal 443 to the associated first lead wire portions 22a. As illustrated in FIG. 38, an excess length of each first lead wire portion 22a is cut off. This provides the lead wire connection terminals 443 in a state H.

As illustrated in FIG. 39, the remote connecting wire portions 432 are mechanically and metallurgically joined to the second lead wire portions 22b by a method substantially the same as the method of joining the lead wire connection terminals 443 to the first lead wire portions 22a. Specifically, the state of each remote connecting wire portion 432 is changed from a state D where the remote connecting wire portion 432 extends in the central axis direction (i.e., the direction Z) to a state E where the end 432a of each remote connecting wire portion 432 is bent by about 90 degrees. Then, the state of each remote connecting wire portion 432 is changed to a state F where each second lead wire portion 22b is placed on a position (i.e., the junction 432b) inwardly close to a bent corner of the end 432a of the associated remote connecting wire portion 432. Subsequently, the state of each remote connecting wire portion 432 is changed to a state G where the end 432a of each remote connecting wire portion 32 is further bent by about 90 degrees such that each second lead wire portion 22b is sandwiched between facing portions of the associated end 432a. In the state G, a pressure is applied to a direction in which each second lead wire portion 22b is sandwiched between the facing portions of the end 432a of the associated remote connecting wire portion 432 (i.e., in the direction A), and heat is applied such that a brazing material applied to the junction 432b of the end 432a of each remote connecting wire portion 432 in advance melts and then solidifies. The end 432a of each remote connecting wire portion 32 is thus mechanically and metallurgically joined to the associated second lead wire portion 22b.

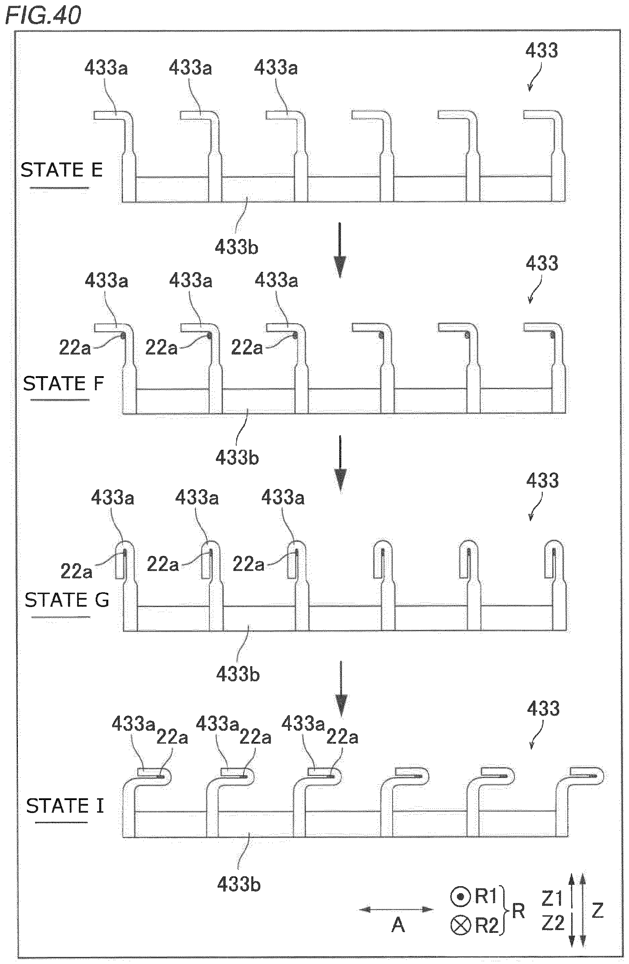

As illustrated in FIG. 40, the neutral point connecting wire portions 433 are mechanically and metallurgically joined to the first lead wire portions 22a by a method substantially the same as the method of joining the lead wire connection terminals 443 to the first lead wire portions 22a. Specifically, the state of each neutral point connecting wire portion 433 is changed from a state E where the ends 433c are bent by about 90 degrees to a state F where the first lead wire portions 22a are placed on positions (i.e., the junctions 433d) inwardly close to bent corners of the ends 433c. Then, the state of each neutral point connecting wire portion 433 is changed to a state G where the ends 433c of each neutral point connecting wire portion 433 are further bent by about 90 degrees such that each first lead wire portion 22a is sandwiched between facing portions of the associated end 433c. In the state G, a pressure is applied to a direction in which each second lead wire portion 22b is sandwiched between the facing portions of the associated end 433c of each neutral point connecting wire portion 433 (i.e., in the direction A), and heat is applied such that a brazing material applied to the junctions 433d of the ends 433c of each neutral point connecting wire portion 433 in advance melts and then solidifies. The ends 433c of each neutral point connecting wire portion 433 are thus mechanically and metallurgically joined to the associated first lead wire portions 22a.

In step S47, the junctions between the lead wire connection terminals 443 and the first lead wire portions 22a (i.e., the connecters 443b) and the junctions between the neutral point connecting wire portions 433 and the first lead wire portions 22a (i.e., the ends 433c of the neutral point connecting wire portions 433) are housed in the first retaining member 440. In step S47, the junctions between the remote connecting wire portions 432 and the second lead wire portions 22b (i.e., the ends 432a of the remote connecting wire portions 432) are housed in the second retaining member 450.

Specifically, the connecters 443b of each lead wire connection terminal 443 illustrated in FIGS. 36 and 37 are mechanically and metallurgically joined to the associated first lead wire portions 22a, and an excess length of each first lead wire portion 22a is cut off, thus providing the lead wire connection terminals 443 in a state H. From this state, a root of each connecter 443b (i.e., a boundary between each connecter 443b and the associated first terminal portion 443d) is bent by about 90 degrees in the direction A. A portion of each connecter 443b adjacent to the associated first terminal portion 443d is thus housed in the groove 442b of the first retaining member 440 extending in the direction A.

As illustrated in FIG. 39, the state of each remote connecting wire portion 432 is changed from the state G where the end 432a of each remote connecting wire portion 432 is mechanically and metallurgically joined to the associated second lead wire portion 22b to a state where a root of each end 432a (i.e., a boundary between the end 432a and a region of each remote connecting wire portion 432 other than the end 432a) is bent by about 90 degrees in the direction A. Before the end 432a of each remote connecting wire portion 432 is bent by about 90 degrees in the direction A, an excess length of each second lead wire portion 22b is cut off. A portion of the end 432a adjacent to the region of each remote connecting wire portion 432 other than the end 432a is housed in the groove 452a (see FIG. 25) of the second retaining member 450 extending in the direction A.

As illustrated in FIG. 40, the state of each neutral point connecting wire portion 433 is changed from the state G where the ends 433c of each neutral point connecting wire portion 433 are mechanically and metallurgically joined to the associated first lead wire portions 22a to a state where roots of the ends 433c (i.e., boundaries between the ends 433c of the neutral point terminal portions 433a (see FIG. 27) and regions of each neutral point connecting wire portion 433 other than the ends 433c) are bent by about 90 degrees in the direction A. Before the ends 433c of each neutral point connecting wire portion 433 are bent by about 90 degrees in the direction A, an excess length of each first lead wire portion 22a is cut off. Portions of the ends 433c adjacent to the regions of each neutral point connecting wire portion 433 other than the ends 433c are housed in a groove (not illustrated) of the first retaining member 440 extending in the direction A.

### Effects of Structures of First to Third Embodiments

The structures of the first to third embodiments are able to achieve effects described below.

In the first to third embodiments described above, the connecting wire unit (30) is disposed between the outer ends (61a, 61b) of the coil end portions (60a, 60b) facing in the central axis direction and the end faces (10a, 10b) of the stator core (10) in the central axis direction (Z). Thus, at least portions (31, 32) of the connecting wire unit (30) are disposed closer to the stator core (10), i.e., inward in the central axis direction, relative to the outer ends (61a, 61b) of the coil end portions (60a, 60b) facing in the central axis direction. Accordingly, an increase in the size of the stator (100, 300, 400) in the central axis direction is more effectively prevented than when an entirety of the connecting wire unit (30) is disposed to protrude outward in the central axis direction from the outer ends (61a, 61b) of the coil end portions (60a, 60b) facing in the central axis direction.

In the first to third embodiments described above, the coil end portions (60a, 60b) are disposed away from the end faces (10a, 10b) of the stator core (10) in the central axis direction (i.e., the direction Z) by the insulation distance (D). Because the coil end portions (60a, 60b) are disposed away from the end faces (10a, 10b) of the stator core (10) by the insulation distance (D), at least portions (41, 51) of the connecting wire unit (30) are disposed in the clearances (CL1, CL2) defined between the coil end portions (60a, 60b) and the end faces (10a, 10b) of the stator core (10) in the central axis direction (Z). Forming the coil end portions (60a, 60b) makes it necessary for the coil end portions (60a, 60b) to be disposed away from the end faces (10a, 10b) of the stator core (10) in the central axis direction (i.e., the direction Z) by the insulation distance (D). Accordingly, the clearances (CL1, CL2) each having a length corresponding to the insulation distance (D) in the central axis direction (i.e., the direction Z) are defined between the coil end portions (60a, 60b) and the end faces (10a, 10b) of the stator core (10). With attention focused on this point, providing the structures according to the embodiments described above enables at least portions of the connecting wire unit (30) to be disposed in the existing clearances (CL1, CL2) present between the coil end portions (60a, 60b) and the end faces (10a, 10b) of the stator core (10). Because utilization of the existing clearances (CL1, CL2) is enabled, these structures do not require any additional area where the connecting wire unit (30) is to be disposed. Consequently, these structures are able to more effectively prevent an increase in the size of the stator (100, 300, 400) in the central axis direction.

In the first to third embodiments described above, the stator further includes retaining members (40, 50, 340, 350) retaining the connecting wire unit (30). At least portions (41, 510) of the retaining members (40, 50, 340, 350) are disposed in the clearances (CL1, CL2) defined between the coil end portions (60a, 60b) and the end faces (10a, 10b) of the stator core (10) in the central axis direction (i.e., the direction Z). Such a structure enables the connecting wire unit (30) to be disposed in the clearances (CL1, CL2) defined between the coil end portions (60a, 60b) and the end faces (10a, 10b) of the stator core (10), with the connecting wire unit (30) retained by the retaining members (40, 50, 340, 350). Accordingly, placement (or installment of wiring) of the connecting wire unit (30) in the clearances (CL1, CL2) between the coil end portions (60a, 60b) and the end faces (10a, 10b) of the stator core (10) is more facilitated in an integrated manner than when only wiring of the connecting wire unit (30) is installed in the clearances (CL1, CL2) between the coil end portions (60a, 60b) and the end faces (10a, 10b) of the stator core (10). The connecting wire unit (30) is protectable by the retaining members (40, 50, 340, 350).

In the first to third embodiments described above, the retaining members (40, 50, 340, 350) include: the first portions (41, 51) disposed in the clearances (CL1, CL2); and the second portions (42, 52, 442, 452) disposed adjacent to the coil end portions (60a, 60b) in the radial direction (i.e., the direction R), in the radial direction (i.e., the direction R) of the stator core (10) and continuous with the first portions (41, 51). Each of the first portions (41, 51) and the associated second portion (42, 52, 442, 452) form an L shape in cross section in the radial direction (i.e., the direction R). Such a structure makes it possible to use, as regions where the connecting wire unit (30) is to be disposed, regions (which are existing spaces) adjacent to the coil end portions (60a, 60b) in the radial direction (i.e., the direction R) in addition to the clearances (CL1, CL2) between the coil end portions (60a, 60b) and the end faces (10a, 10b) of the stator core (10). Accordingly, this structure makes it possible to more effectively prevent an increase in the size of the stator (100, 300, 400) in the central axis direction caused by providing the connecting wire unit (30).

In the first to third embodiments described above, the connecting wire unit (30) is disposed in the first portions (41, 51). The retaining member (40, 50, 340, 350) includes the terminal members (43, 443) formed across the first portion (41, 51) and the second portion (42, 52, 442, 452). The terminal members (43, 443) are connected to the connecting wire unit (30) through the portions (43a) of the terminal members (43, 443) located in the first portion (41, 51). The terminal members (43, 443) are connected to the lead wire portions (22a) through the portions (43b) of the terminal members (43, 443) located adjacent to the second portion (42, 52, 442, 452). Disposing the first portions (41, 51) in the clearances (CL1, CL2) between the coil end portions (60a, 60b) and the end faces (10a, 10b) of the stator core (10) may make it difficult to provide a space for connecting work (or joining work) in directly connecting the connecting wire unit (30), which is disposed in the first portion (41,51), to the lead wire portions (22a). Providing the terminal members (43, 443) as in the first embodiment, however, makes it possible to connect (or join) the terminal members (43, 443), which are connected to the first portion (41, 51), to the lead wire portions (22a) through the second portion (42, 52, 442, 452) adjacent to the coil end portions (60a, 60b) in the radial direction and located outside the clearances (CL1, CL2). This consequently facilitates an improvement in workability of connecting the lead wire portions (22a) to the connecting wire unit (30).

In the third embodiment described above, the terminal members (443) are connected to the lead wire portions (22a) by being mechanically joined to the lead wire portions (22a) by swaging and by being metallurgically joined to the lead wire portions (22a) with a brazing material. In this structure, mechanically joining the terminal members (443) to the lead wire portions (22a) by swaging makes it possible to ensure strength to withstand external force or aging, and metallurgically joining the terminal members (443) to the lead wire portions (22a) with the brazing material makes it possible to ensure favorable metal-to-metal conductivity and junction area size after joining.

In the third embodiment described above, at least portions of the connecters (443b) of the terminal members (443) connected to the lead wire portions (22a) are housed in the groove (442b) defined in the outer end (442c) of the retaining member (440) facing in the central axis direction (i.e., the direction Z). In this structure, at least portions of the connecters (443b) connecting the terminal members (443) to the lead wire portions (22a) are housed in the groove (442b) defined in the retaining member (440). Thus, the stator (400) is smaller in size than when an entirety of each connecter (443b) is located outside the retaining member (440). The groove (442b) in which at least portions of the connecters (443b) are housed is defined in the outer end (442c) of the retaining member (440) facing in the central axis direction (i.e., the direction Z). Accordingly, at least portions of the connecters (443b) are easily housed in the groove (442b) when the connecters (443b) are provided adjacent to the outer end (442c) of the retaining member (440) facing in the central axis direction (i.e., the direction Z).

In the third embodiment described above, the retaining member (440) includes the portion (442) having an annular shape along the coil end portions (60a, 60b). At least portions of the connecters (443b) are bent in the circumferential direction (i.e., the direction A) of the stator core (10) along the annular portion (442) of the retaining member (440) and are thus housed in the groove (442b) extending in the circumferential direction (i.e., the direction A) of the retaining member (440). In this structure, the portions of the connecters (442b) bent in the circumferential direction (i.e., the direction A) of the retaining member (440) are easily housed in the groove (442b) extending in the circumferential direction (i.e., the direction A) of the retaining member (440).

In the third embodiment described above, the stator further includes the insulator (80a) having an annular shape extending in the circumferential direction (i.e., the direction A) such that the insulator (80a) covers the groove (442b) defined in the outer end (442c) of the retaining member (440) facing in the central axis direction (i.e., the direction Z). In this structure, the annular insulator (80a) extending in the circumferential direction (i.e., the direction A) is able to cover the groove (442b) in which at least portions of the connecters (443b) are housed. Accordingly, if an insulation distance is not kept between each connecter (443b) and its surrounding non-insulating substance, at least portions of the connecters (443b) would be easily insulated from its surrounding non-insulating substance.

In the third embodiment described above, each terminal member (443) includes: a pair of the first terminal portions (443d) continuous with an associated pair of the connecters (443b) and extending in the central axis direction; a pair of the second terminal portions (443e) continuous with the pair of first terminal portions (443d) and extending in the radial direction (i.e., the direction R) of the stator core (10); and the third terminal portion (443f) extending in the circumferential direction (i.e., the direction A) of the stator core (10) and connecting the pair of second terminal portions (443e). The connecting wire unit (30) is usually provided in the form of an annular shape. Accordingly, the above-described structure enables each third terminal portion (443f) extending in the circumferential direction (i.e., the direction A) to be connected to the annular connecting wire unit (30) and enables each pair of first terminal portions (443d) to be connected to the associated lead wire portions (22a). Consequently, each terminal member (443) is able to provide two wiring paths for connection of the connecting wire unit (30) with the lead wire portions (22a).

In the third embodiment described above, each terminal member (443) includes: the portions (443d, 443e, 443f) which are contained in the retaining member (440) and in which the round wire substantially circular in cross section is deformed; and the portions (443b) which extend out of the retaining member (440) and in which the round wire is not deformed. In this structure, the portions (443b) of each terminal member (443) are contained in the retaining member (440), with the round wire deformed. This enables the portions (443b) of each terminal member (443) to be contained in the retaining member (440) such that the portions (443b) are relatively compact in the direction in which the round wire is deformed. Because the round wire extends out of the retaining member (440), the portions (443b) of each terminal member (443) are easily usable as the connecters (443b) for connection of each terminal member (443) with the associated lead wire portions (22a). Consequently, performing a relatively simple process on a round wire made of a general-purpose conductive material small in thickness and diameter makes it possible to easily provide two parts to be used for different purposes using a continuous material.

In the third embodiment described above, the neutral point connecting wire portions (433) are connected to the lead wire portions (22a) by being mechanically joined to the lead wire portions (22a) by swaging and by being metallurgically joined to the lead wire portions (22a) with a brazing material, and the remote connecting portions (432) are connected to the lead wire portions (22b) by being mechanically joined to the lead wire portions (22b) by swaging and by being metallurgically joined to the lead wire portions (22b) with a brazing material. In this structure, mechanically joining the neutral point connecting wire portions (433) to the lead wire portions (22a) by swaging and mechanically joining the remote connecting portions (432) to the lead wire portions (22b) by swaging make it possible to ensure strength to withstand external force or aging, and metallurgically joining the neutral point connecting wire portions (433) to the lead wire portions (22a) with the brazing material and metallurgically joining the remote connecting portions (432) to the lead wire portions (22b) with the brazing material make it possible to ensure favorable metal-to-metal conductivity and junction area size after joining.

In the first to third embodiments described above, the second portions (42, 52, 442, 452) are provided with the flow passages (42b, 52b) through which liquid flows in the radial direction (i.e., the direction R). When the liquid is cooling oil to cool the coils (20, 320), this structure enables the cooling oil flowing outside the stator (100, 300, 400) to flow through the flow passages (42b, 52b) of the second portions (42, 52, 442, 452) in the radial direction (i.e., the direction R) such that the cooling oil is guided to the coil end portions (60a, 60b). Accordingly, if the second portions (42, 52, 442, 452) of the retaining members (40, 50, 340, 350) are provided adjacent to the coil end portions (60a, 60b) in the radial direction (i.e., the direction R), this structure would be able to prevent a degradation in the function of cooling the coils (20, 320).

In the first to third embodiments described above, the outer ends (40a) of the retaining members (40, 50, 340, 350) facing in the radial direction (i.e., the direction R) are disposed inward of (or in the direction R1 relative to) the radial outer end (10c) of the stator core (10) in the radial direction (i.e., the direction R) of the stator core (10). In this structure, the retaining members (40, 50, 340, 350) are not located (or protruded) radially outward of (or in the direction R2 relative to) the stator core (10). Accordingly, this structure is able to prevent an increase in the size of the stator (100, 300, 400) in the radial direction (i.e., the direction R) caused by providing the retaining members (40, 50, 340, 350) on the stator (100, 300, 400).

In the first to third embodiments described above, the stator core (10) includes: the slots (13) in which portions (21) of the coils (20, 320) are disposed; and the back yoke (11) defined on the first radial side (i.e., in the direction R2) relative to the slots (13). The coil end portions (60a, 60b) include the radial protrusions (64a, 64b) protruding in the central axis direction (i.e., the direction Z) from the slots (13) and protruding to the first radial side (i.e., in the direction R2) relative to the slots (13) along the back yoke (11). The connecting wire unit (30) is disposed between the radial protrusions (64a, 64b) and the end faces (10a, 10b) of the stator core (10) in the central axis direction (i.e., the direction Z). This structure enables the connecting wire unit (30) to be disposed between the back yoke (11), on which the clearances (CL1, CL2) are relatively easily definable, and the radial protrusions (64a, 64b) in the central axis direction. Consequently, this structure is able to effectively prevent an increase in the size of the stator (100, 300, 400).

In the first to third embodiments described above, the connecting wire unit (30) includes: the first connecting wire portion (31, 33) disposed between the outer ends (61a) of the coil end portions (60a) located on the first side in the central axis direction (i.e., the direction Z) or located in the direction Z1 and the first end face (10a) of the stator core (10) that is one of the end faces of the stator core (10) located on the first side in the central axis direction (i.e., the direction Z) or located in the direction Z1; and the second connecting wire portion (32) disposed between the outer ends (61b) of the coil end portions (60b) located on the second side in the central axis direction (i.e., the direction Z) or located in the direction Z2 and the second end face (10b) of the stator core (10) that is the other one of the end faces of the stator core (10) located on the second side in the central axis direction (i.e., the direction Z) or located in the direction Z2. This structure enables the first connecting wire portion (31, 33, 433) and the second connecting wire portion (32, 432) of the connecting wire unit (30) to be disposed in a distributed manner. Thus, the lengths (or thicknesses) of the first connecting wire portion (31, 33, 433) and the second connecting wire portion (32, 432) in the central axis direction (i.e., the direction Z) are smaller than when the connecting wire portions (31, 32, 33, 432, 433) are integral with each other. Accordingly, this structure enables utilization of both of the clearances (CL1, CL2) defined between the outer ends (61a, 61b) of the coil end portions (60a, 60b) on both sides in the central axis direction (i.e., the direction Z) and the end faces (10a, 10b) of the stator core (10). Consequently, this structure is able to more effectively prevent an increase in the size of the stator (100, 300, 400) in the central axis direction (i.e., the direction Z).

In the first to third embodiments described above, the coils (20, 320) include: the first coils (20a) each having the first winding number (N1, Na1) obtained by adding half a lap to or subtracting half a lap from the predetermined winding number (N, Na); and the second coils (20b) each connected to the associated first coil (20a) through the second connecting wire portion (32) and having the second winding number (N2, Na1) obtained by adding half a lap to or subtracting half a lap from the predetermined winding number (N, Na). In this structure, providing the first coils (20a) and the second coils (20b) by winding enables the lead wire portions (22a, 322a) to be easily pulled out to the first side in the central axis direction (i.e., the direction Z) or in the direction Z1, and enables the lead wire portions (22b, 322b) to be easily pulled out to the second side in the central axis direction (i.e., the direction Z) or in the direction Z2. Accordingly, this structure is able to simplify the step (S1) that involves pulling out the lead wire portions (22a, 22b, 322a, 322b) to both sides in the central axis direction (i.e., the direction Z).

In the first embodiment described above, the first connecting wire portion (31, 33) includes: the power line connection portion (31) connecting the lead wire portions (22a) to the power lines (71); and the neutral point connecting wire portion (33) connecting the lead wire portions (22a) adjacent to a neutral point. The second connection wire portion (32) includes the remote connecting portions (32) that establish remote connections between the lead wire portions (22b) of the same phase that are disposed away from each other. This structure would effectively enable the connecting wire unit (30) to be disposed on the first and second sides in the central axis direction (i.e., the direction Z) or in the directions Z1 and Z2 in a separated manner (or in a distributed manner), if the connecting wire unit (30) is provided with the remote connecting portions (32) that establish remote connections between the lead wire portions (22b) of the same phase in addition to the power line connection portion (31) and the neutral point connecting wire portion (33).

In the second embodiment described above, the first connecting wire portion (31) includes the power line connection portion (31) connecting the lead wire portions (322a) to the power lines (71). The second connecting wire portion (322) includes the neutral point connecting wire portion (333) connecting the lead wire portions (322b) adjacent to the neutral point. This structure enables the power line connection portion (31) and the neutral point connecting wire portion (333) to be disposed on the first and second sides in the central axis direction (i.e., the direction Z) or in the directions Z1 and Z2 in a separated manner. This results in a reduction in the size of each component of the connecting wire unit (30). Accordingly, if spaces between the coil end portions (60a, 60b) and the end faces (10a, 10b) of the stator core (10) are relatively small, this structure would enable the power line connection portion (31) or the neutral point connecting wire portion (333) to be easily disposed between the coil end portions (60a, 60b) and the end faces (10a, 10b) of the stator core (10).

In the first to third embodiments described above, the stator core (10) includes the slots (13) which extend in the central axis direction (i.e., the direction Z) and in which portions of the coils (20, 320) are housed. The stator further includes the sheet insulating members (23) disposed between the portions of the coils (20, 320) housed in the slots (13) and the stator core (10) in the radial direction (i.e., the direction R) of the stator core (10) so as to insulate the coils (20, 320) from the stator core (10). The insulating members (23) include the protrusions (23a, 23b) protruding from the end faces (10a, 10b) of the stator core (10) in the central axis direction (i.e., the direction Z). At least portions of the connecting wire unit (30) are disposed to overlap with the protrusions (23a, 23b) as viewed in the radial direction (i.e., the direction R). This structure enables the protrusions (23a, 23b) to insulate the portions of the connecting wire unit (30), which are disposed to overlap with the protrusions (23a, 23b) in the radial direction (i.e., the direction R), from the coils (20, 320) disposed in the slots (13). Consequently, this structure enables the portions of the connecting wire unit (30) to be disposed relatively closer to the coils (20, 320) in the radial direction (i.e., the direction R) than when no protrusions (23a, 23b) are provided.

In the first to third embodiments described above, the coil end portions (60a, 60b) are disposed away from the end faces (10a, 10b) of the stator core (10) in the central axis direction (i.e., the direction Z) by the insulation distance (D). The protrusions (23a, 23b) are disposed to protrude from the end faces (10a, 10b) of the stator core (10) in the central axis direction (i.e., the direction Z) by the insulation distance (D). Because the coil end portions (60a, 60b) are disposed away from the end faces (10a, 10b) of the stator core (10) by the insulation distance (D), this structure enables portions of the connecting wire unit (30) to be disposed throughout the central axis direction (i.e., the direction Z) of the clearances (CL1, CL2) defined between the coil end portions (60a, 60b) and the end faces (10a, 10b) of the stator core (10). Consequently, this structure enables the portions of the connecting wire unit (30) to be disposed throughout the clearances (CL1, CL2) defined between the coil end portions (60a, 60b) and the end faces (10a, 10b) of the stator core (10).

Effects of Manufacturing Methods according to First to Third Embodiments

The manufacturing methods according to the first to third embodiments are able to achieve effects described below.

The manufacturing methods according to the first to third embodiments described above enable placement of the connecting wire unit (30) between the outer ends (61a, 61b) of the coil end portions (60a, 60b) facing in the central axis direction (i.e., the direction Z) and the end faces (10a, 10b) of the stator core (10) in the central axis direction (i.e., the direction Z). Thus, at least portions (31, 32) of the connecting wire unit (30) are disposed closer to the stator core (10), i.e., inward in the central axis direction (i.e., the direction Z), relative to the outer ends (61a, 61b) of the coil end portions (60a, 60b) facing in the central axis direction (i.e., the direction Z). Accordingly, the first to third embodiments are able to provide the method for manufacturing the stator (100, 300, 400) which makes it possible to more effectively prevent an increase in the size of the stator (100, 300, 400) in the central axis direction (i.e., the direction Z) than when an entirety of the connecting wire unit (30) is disposed to protrude outward in the central axis direction (i.e., the direction Z) from the outer ends (61a, 61b) of the coil end portions (60a, 60b) facing in the central axis direction (i.e., the direction Z).

In the first to third embodiments described above, the stator further includes the retaining members (40, 50, 340, 350) that retain the connecting wire unit (30). The step (S3) of placing the connecting wire unit (30) involves placing at least portions (41, 51) of the retaining members (40, 50, 340, 350) in the clearances (CL1, CL2) defined between the coil end portions (60a, 60b) and the end faces (10a, 10b) of the stator core (10) in the central axis direction (i.e., the direction Z), with the connecting wire unit (30) retained by the retaining members (40, 50, 340, 350), thus placing at least portions (41, 51) of the connecting wire unit (30) in the clearances (CL1, CL2) defined between the coil end portions (60a, 60b) and the end faces (10a, 10b) of the stator core (10). Accordingly, placement (or installment of wiring) of the connecting wire unit (30) in the clearances (CL1, CL2) between the coil end portions (60a, 60b) and the end faces (10a, 10b) of the stator core (10) is more facilitated in an integrated manner than when only wiring of the connecting wire unit (30) is installed in the clearances (CL1, CL2) between the coil end portions (60a, 60b) and the end faces (10a, 10b) of the stator core (10).

In the third embodiment described above, the retaining member (440) includes the terminal members (443) each connected at its first side to the connecting wire unit (31) and connected at its second side to the lead wire portion (22a) of the associated coil (20). The manufacturing method further includes the step (S6) that involves, after the step (S45) of forming the coil end portions (60), mechanically joining the terminal members (443) to the lead wire portions (22a) by swaging and metallurgically joining the terminal members (443) to the lead wire portions (22) with a brazing material, thus connecting the terminal members (443) to the lead wire portions (22a). Accordingly, the third embodiment is able to provide the method for manufacturing the stator (400) which involves mechanically joining the terminal members (443) to the lead wire portions (22a) by swaging so as to ensure strength to withstand external force or aging, and metallurgically joining the terminal members (443) to the lead wire portions (22a) with the brazing material so as to ensure favorable metal-to-metal conductivity and junction area size after joining.

In the first to third embodiments described above, the connecting wire unit (30) has an annular shape as viewed in the central axis direction (Z). The step (S3, S44) of placing the connecting wire unit (30) involves placing the connecting wire unit (30) on the stator core (10) such that the coil end portions (60a, 60b) protruding from the end faces (10a, 10b) of the stator core (10) are disposed in the holes (71, 72) located radially inward of (i.e., in the direction R1 relative to) the connecting wire unit (30) having the annular shape. Thus, the coil end portions (60a, 60b) are placed such that the coil end portions (60a, 60b) are located radially inward of (i.e., in the direction R1 relative to) the connecting wire unit (30) having the annular shape. Accordingly, the subsequent step (S4, S45), i.e., the step of forming the coil end portions (60a, 60b), enables the connecting wire unit (30) to be easily placed between the outer ends (61a, 61b) of the coil end portions (60a, 60b) facing in the central axis direction and the end faces (10a, 10b) of the stator core (10) in the central axis direction.

### Variations

The embodiments disclosed herein should be considered as not limitative but illustrative in all respects. The scope of the present invention is defined not by the description of the foregoing embodiments but by the claims and encompasses all modifications (and variations) within the meaning and scope equivalent to the claims.

### First Variation

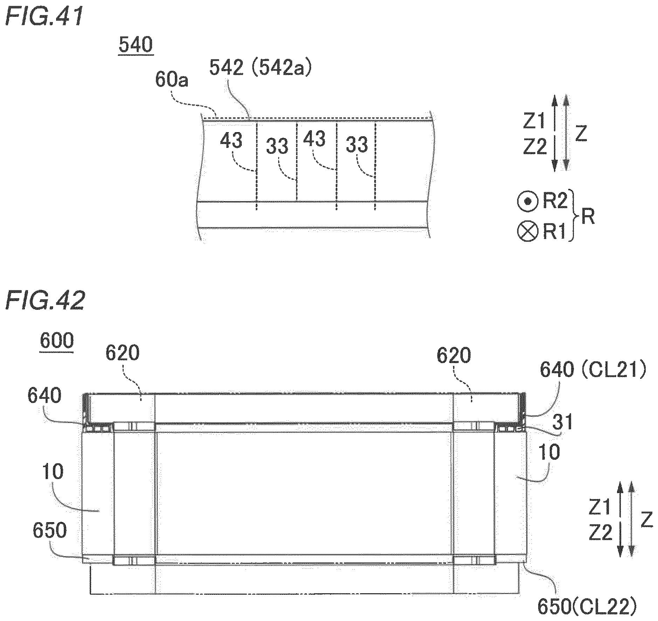

In the first to third embodiments, for example, the first and second retaining members are each provided with the flow passages by way of example. The present invention, however, is not limited to this example. In one example, only one of the first and second retaining members may be provided with the flow passages. The first and second retaining members may be provided with no flow passages when there is no need for liquid (or cooling oil) to flow therethrough. In an example illustrated in FIG. 41, a second portion 542 of a first retaining member 540 according to a first variation is provided with no flow passages. The second portion 542 is provided with a wall 542a covering a radially outward portion (or at least a portion) of each coil end portion 60a.

### Second Variation

In the first to third embodiments, for example, the connecting wire unit is disposed on both sides of the stator in the axial direction. The present invention, however, is not limited to this example. In an example illustrated in FIG. 42, a stator 600 according to a second variation includes: a first retaining member 640 that retains the power connecting wire portion 31; and a spacer 650. The first retaining member 640 is disposed in a clearance CL21 defined on the first axial side of the stator core 10. The spacer 650 is disposed in a clearance CL22 defined on the second axial side of the stator core 10. Coils 620 of the stator 600, for example, are provided with no neutral point and include a three-phase delta connection.

### Other Variations

In the first to third embodiments, for example, the rotor is disposed radially inward of the stator by way of example. The present invention, however, is not limited to this example. In another example, the rotor may be disposed radially outward of the stator. In this example, the first and second retaining members may be disposed radially inward of the slots.

In the first to third embodiments, the coils are provided by winding round wires by way of example. The present invention, however, is not limited to this example. In another example, the coils may be provided using rectangular conductor wires.

In the first to third embodiments, the power connecting wire portion, a part of each remote connecting wire portion, and a part of the neutral point connecting wire portion are disposed in the clearances between the coil end portions and the end faces of the stator core by way of example. The present invention, however, is not limited to this example. In other words, a part of any of the connecting wire portions (i.e., the power connecting wire portion, the remote connecting wire portions, and the neutral point connecting wire portion) may be disposed in the clearance(s) between the coil end portions and the end face(s) of the stator core.

In the first to third embodiments, the stator is provided with the first and second retaining members that retain the connecting wire unit by way of example. The present invention, however, is not limited to this example. The connecting wire unit may be directly disposed between the outer ends of the coil end portions facing in the central axis direction and the end faces of the stator core.

In the first to third embodiments, the first retaining member is provided with the first and second portions such that the first retaining member is L-shaped in radial cross section by way of example. The present invention, however, is not limited to this example. In one example, the first retaining member may be provided with only one of the first and second portions.

In the first to third embodiments, the lead wire connection terminals are disposed such that the lead wire connection terminals axially outwardly extend out of the second portion by way of example. The present invention, however, is not limited to this example. In one example, the lead wire connection terminals may be disposed such that the lead wire connection terminals radially outwardly extend out of the second portion.

In the first to third embodiments, the outer end of the first retaining member is disposed inward of the outer end of the stator core in the radial direction (i.e., such that the outer end of the first retaining member does not protrude from the outer end of the stator core) by way of example. The present invention, however, is not limited to this example. In one example, when the stator is allowed to increase in size in the radial direction, the outer end of the first retaining member may be disposed outward of the outer end of the stator core (i.e., such that the outer end of the first retaining member protrudes from the outer end of the stator core).

In the first to third embodiments, each first coil has the first winding number obtained by subtracting half a lap from the predetermined winding number, and each second coil has the second winding number obtained by adding half a lap to the predetermined winding number. The present invention, however, is not limited to this example. In one example, each first coil may have the first winding number obtained by adding half a lap to the predetermined winding number, and each second coil may have the second winding number obtained by subtracting half a lap from the predetermined winding number.

In the first to third embodiments, the step (S3) of placing the first and second retaining members on the end faces of the stator core is performed after the step (S2) of placing the coils in the stator core by way of example. The present invention, however, is not limited to this example. Alternatively, the step (S2) of placing the coils in the stator core may be performed after the step (S3) of placing the first and second retaining members on the end faces of the stator core.

In the first and second embodiments, the lead wire portions are joined to the lead wire connection terminals by laser welding (or brazing) by way of example. The present invention, however, is not limited to this example. In one example, the lead wire portions may be joined to the lead wire connection terminals by ultrasonic joining. In another example, the lead wire portions may be welded to the lead wire connection terminals by melting a base metal. In still another example, the lead wire portions may be joined to the lead wire connection terminals by a joining method other than welding. The lead wire portions may be joined to the lead wire connection terminals, for example, by applying and curing a conductive paste.

In the third embodiment, the stator includes the insulator having an annular shape extending in the circumferential direction such that the insulator covers the groove defined in the outer end of the retaining member facing in the central axis direction by way of example. The present invention, however, is not limited to this example. Alternatively, the stator may include no insulator covering the groove defined in the retaining member.

In the third embodiment, at least a portion of each connecter is housed in the groove defined in the outer end of the retaining member facing in the central axis direction by way of example. The present invention, however, is not limited to this example. Alternatively, each connecter may be housed in a groove defined in a portion of the retaining member other than the outer end of the retaining member facing in the central axis direction.

In the third embodiment, at least a portion of each connecter is housed in the groove extending in the circumferential direction of the retaining member by way of example. The present invention, however, is not limited to this example. Alternatively, an entirety of each connecter may be disposed outside the groove extending in the circumferential direction of the retaining member. In one example, an entirety of each connecter may be disposed outside the outer end of the retaining member facing in the central axis direction.

In the third embodiment, at least a portion of each connecter is bent in the circumferential direction of the annular portion of the retaining member by way of example. The present invention, however, is not limited to this example. Alternatively, each connecter may include no portion bent in the circumferential direction.

In the third embodiment, the terminal members each include a portion which is contained in the retaining member and in which the round wire substantially circular in cross section is deformed and a portion which extends out of the retaining member and in which the round wire is not deformed by way of example. The present invention, however, is not limited to this example. Alternatively, a portion of each terminal member in which the round wire is not deformed may be contained in the retaining member, or a portion of each terminal member in which the round wire is deformed may extend out of the retaining member. The terminal members may each consist of either a portion in which the round wire is deformed or a portion in which the round wire is not deformed.

### Description of the Reference Numerals

- 10: stator core

- 10a: end face (first end face)
- 10b: end face (second end face)
- 10c: outer end (outer end of stator core)
- 20, 320, 620: coil
- 20a: first coil
- 20b: second coil
- 22a: first lead wire portion (lead wire portion)
- 22b: second lead wire portion (lead wire portion)
- 23: insulating member
- 23a, 23b: protrusion (of insulating member)
- 30: connecting wire unit
- 31: power connecting wire portion (first connecting wire portion)
- 32, 432: remote connecting wire portion (second connecting wire portion)
- 33, 433: neutral point connecting wire portion (first connecting wire portion)
- 40, 340, 440, 540, 640: first retaining member (retaining member)
- 40a: outer end (outer end of retaining member)
- 41, 51: first portion
- 42, 52, 442, 542: second portion
- 43, 443: lead wire connection terminal (terminal member)
- 42b, 52a: flow passage
- 50, 350, 450: second retaining member (retaining member)
- 60a, 60b: coil end portion
- 61a, 61b: outer end (outer end of coil end portion)
- 64a, 64b: radial protrusion
- 71, 72: hole (radially inward of annular connecting wire unit)
- 100, 300, 400, 600: stator
- 333: neutral point connecting wire portion (second connecting wire portion)
- CL1, CL2, CL11, CL12, CL21, CL22: clearance insulation distance D

## Claims

1. A stator comprising:
a stator core;
a plurality of coils each including
coil end portions protruding from end faces of the stator core facing in a central axis direction, and
a lead wire portion; and
a connecting wire unit that is disposed between outer ends of the coil end portions facing in the central axis direction and the end faces of the stator core in the central axis direction and is connected to the lead wire portions of the coils.

2. The stator according to claim 1, wherein
the coil end portions are disposed away from the end faces of the stator core in the central axis direction by an insulation distance, and
at least a portion of the connecting wire unit is disposed in a clearance defined between the coil end portions and the end face of the stator core in the central axis direction, the clearance being formed by the coil end portions being disposed away from the end faces of the stator core by an insulation distance.

3. The stator according to claim 2, further comprising a retaining member retaining the connecting wire unit, wherein
at least a portion of the retaining member is disposed in the clearance defined between the coil end portions and the end face of the stator core in the central axis direction.

4. The stator according to claim 3, wherein
the retaining member includes
a first portion disposed in the clearance, and
a second portion disposed radially adjacent to the coil end portions in a radial direction of the stator core and continuous with the first portion, and
the first and second portions form an L shape in cross section in the radial direction.

5. The stator according to claim 4, wherein
the connecting wire unit is disposed in the first portion, and
the retaining member includes terminal members each formed across the first portion and the second portion, the terminal members being connected to the connecting wire unit through portions of the terminal members located in the first portion and being connected to the lead wire portions through portions of the terminal members located adjacent to the second portion.

6. The stator according to claim 1, further comprising a retaining member retaining the connecting wire unit, wherein
the retaining member includes terminal members connected to the connecting wire unit and the lead wire portions.

7. The stator according to claim 5 or 6, wherein
the terminal members are connected to the lead wire portions by being mechanically joined to the lead wire portions by swaging and by being metallurgically joined to the lead wire portions with a brazing material.

8. The stator according to claim 7, wherein
at least portions of connecters of the terminal members connected to the lead wire portions are housed in a groove defined in an outer end of the retaining member facing in the central axis direction.

9. The stator according to claim 8, wherein
the retaining member includes an annular portion extending along the coil end portions, and
at least portions of the connecters are bent in a circumferential direction of the stator core along the annular portion of the retaining member and are thus housed in the groove extending in the circumferential direction of the retaining member.

10. The stator according to claim 9, further comprising an insulator having an annular shape extending in the circumferential direction such that the insulator covers the groove defined in the outer end of the retaining member facing in the central axis direction.

11. The stator according to any one of claims 8 to 10, wherein
the terminal members each include
a pair of first terminal portions continuous with an associated pair of the connecters and extending in the central axis direction,
a pair of second terminal portions continuous with the pair of first terminal portions and extending in a radial direction of the stator core, and
a third terminal portion extending in the circumferential direction of the stator core and connecting the pair of second terminal portions.

12. The stator according to any one of claims 7 to 11, wherein
the terminal members each include
a portion which is contained in the retaining member and in which a round wire substantially circular in cross section is deformed, and
a portion which extends out of the retaining member and in which the round wire is not deformed.

13. The stator according to claim 4 or 5, wherein
the second portion is provided with a flow passage through which liquid flows in the radial direction.

14. The stator according to any one of claims 3 to 5 and 13, wherein
a radial outer end of the retaining member is disposed inward of a radial outer end of the stator core in a radial direction of the stator core.

15. The stator according to any one of claims 1 to 5, 13, and 14, wherein
the stator core includes
slots in which portions of the coils are disposed, and
a back yoke defined on a first radial side relative to the slots,
the coil end portions include radial protrusions protruding in the central axis direction from the slots and protruding to the first radial side relative to the slots along the back yoke, and
the connecting wire unit is disposed between the radial protrusions and the end faces of the stator core in the central axis direction.

16. The stator according to any one of claims 1 to 5 and 13 to 15, wherein
the connecting wire unit includes
a first connecting wire portion disposed between the outer ends of the coil end portions located on a first side in the central axis direction and a first end face of the stator core that is one of the end faces of the stator core located on the first side in the central axis direction, and
a second connecting wire portion disposed between the outer ends of the coil end portions located on a second side in the central axis direction and a second end face of the stator core that is the other one of the end faces of the stator core located on the second side in the central axis direction.

17. The stator according to claim 16, wherein
the coils include
a first coil having a first winding number obtained by adding half a lap to or subtracting half a lap from a predetermined winding number, and
a second coil connected to the first coil through the second connecting wire portion and having a second winding number obtained by adding half a lap to or subtracting half a lap from the predetermined winding number.

18. The stator according to claim 16 or 17, wherein
the first connecting wire portion includes
a power line connection portion connecting the lead wire portions to a power line, and
a neutral point connecting wire portion connecting the lead wire portions adjacent to a neutral point, and
the second connecting wire portion includes a remote connecting portion that establishes a remote connection between the lead wire portions of the same phase disposed away from each other.

19. The stator according to claim 16 or 17, wherein
the neutral point connecting wire portion and the remote connecting wire portion are connected to the lead wire portions by being mechanically joined to the lead wire portions by swaging and by being metallurgically joined to the lead wire portions with a brazing material.

20. The stator according to claim 16 or 17, wherein
the first connecting wire portion includes a power line connection portion connecting the lead wire portions to a power line, and
the second connecting wire portion includes a neutral point connecting wire portion connecting the lead wire portions adjacent to a neutral point.

21. The stator according to claim 20, wherein
the neutral point connecting wire portion is connected to the lead wire portions by being mechanically joined to the lead wire portions by swaging and by being metallurgically joined to the lead wire portions with a brazing material.

22. The stator according to any one of claims 1 to 21, wherein
the stator core includes slots which extend in the central axis direction and in which portions of the coils are housed,
the stator further comprises sheet insulating members disposed between the portions of the coils housed in the slots and the stator core in a radial direction of the stator core so as to insulate the coils from the stator core,
the insulating members include protrusions protruding from the end faces of the stator core in the central axis direction, and
at least a portion of the connecting wire unit is disposed to overlap with the protrusions as viewed in the radial direction.

23. The stator according to claim 22, wherein
the coil end portions are disposed away from the end faces of the stator core in the central axis direction by an insulation distance, and
the protrusions are disposed to protrude from the end faces of the stator core in the central axis direction by the insulation distance.

24. A method for manufacturing a stator including a stator core, a plurality of coils, and a connecting wire unit connected to the coils, the method comprising:
a coil placing step involving placing the coils in the stator core such that coil end portions protrude from end faces of the stator core facing in a central axis direction;
a connecting wire unit placing step involving placing the connecting wire unit on the end faces of the stator core; and
a coil end portion forming step involving, after the coil placing step and the connecting wire unit placing step, forming the coil end portions such that the connecting wire unit is disposed between outer ends of the coil end portions facing in the central axis direction and the end faces of the stator core in the central axis direction.

25. The stator manufacturing method according to claim 24, wherein
the stator further includes a retaining member that retains the connecting wire unit, and
the connecting wire unit placing step involves placing at least a portion of the retaining member in a clearance defined between the coil end portions and the end face of the stator core in the central axis direction, with the connecting wire unit retained by the retaining member, thus placing at least a portion of the connecting wire unit in the clearance defined between the coil end portions and the end face of the stator core.

26. The stator manufacturing method according to claim 22 or 25, wherein
the retaining member includes terminal members each connected at its first side to the connecting wire unit and connected at its second side to a lead wire portion of the associated coil, and
the method further comprises a step that involves, after the coil end portion forming step, mechanically joining the terminal members to the lead wire portions by swaging and metallurgically joining the terminal members to the lead wire portions with a brazing material, thus connecting the terminal members to the lead wire portions.

27. The stator manufacturing method according to any one of claims 24 to 26, wherein
the connecting wire unit has an annular shape as viewed in the central axis direction, and
the connecting wire unit placing step involves placing the connecting wire unit on the stator core such that the coil end portions protruding from the end faces of the stator core are located in a hole radially inward of the connecting wire unit having the annular shape.
